(19) Europäisches Patentamt / European Patent Office / Office européen des brevets

(11) **EP 1 267 178 B1**

(12) **EUROPÄISCHE PATENTSCHRIFT**

(45) Veröffentlichungstag und Bekanntmachung des Hinweises auf die Patenterteilung:
**20.08.2008  Patentblatt 2008/34**

(51) Int Cl.:
*G01S 17/89* *(2006.01)*

(21) Anmeldenummer: **02013172.8**

(22) Anmeldetag: **14.06.2002**

(54) **Verfahren zur Verarbeitung eines tiefenaufgelösten Bildes**

Method for processing a high definition picture

Procédé de traitement d'une image à haute définition

(84) Benannte Vertragsstaaten:
**AT BE CH CY DE DK ES FI FR GB GR IE IT LI LU MC NL PT SE TR**

(30) Priorität: **04.07.2001  DE 10132335
28.09.2001  DE 10148062
15.06.2001  DE 10128954
08.11.2001  DE 10154861**

(43) Veröffentlichungstag der Anmeldung:
**18.12.2002  Patentblatt 2002/51**

(73) Patentinhaber: **IBEO Automobile Sensor GmbH
22179 Hamburg (DE)**

(72) Erfinder:
• **Lages, Ulrich, Dr.
21031 Hamburg (DE)**
• **Fürstenberg, Kay
89075 Ulm (DE)**
• **Willhoeft, Volker
22303 Hamburg (DE)**

(74) Vertreter: **Manitz, Finsterwald & Partner GbR
Postfach 31 02 20
80102 München (DE)**

(56) Entgegenhaltungen:
**EP-A- 0 578 129          US-A- 5 717 401**

• **DIETMAYER ET AL: "Model based object classification and object tracking in traffic scenes from range images" PROCEEDINGS OF IV 2001, IEEE IVS, Mai 2001 (2001-05), XP009023302 Tokio, Japan**

## Beschreibung

Die vorliegende Erfindung betrifft ein Verfahren zur Verarbeitung eines bevorzugt tiefenaufgelösten Bildes eines Überwachungsbereichs, das von einem Sensor für elektromagnetische Strahlung, insbesondere einem Laserscanner, bei einer Abtastung seines Sichtbereichs erfasst wurde und Rohdatenelemente umfasst, die Punkten auf Gegenständen in dem Überwachungsbereich entsprechen und die Koordinaten der Positionen und/oder Geschwindigkeiten und/oder Reflektivitäten der Gegenstandspunkte enthalten.

Verfahren der oben genannten Art sind grundsätzlich bekannt. Bei dem gattungsgemäßen Verfahren kann es sich insbesondere um Verfahren zur Objekterkennung und -verfolgung handeln, mit dem Gegenstände im Sichtbereich des Sensors, bei dem es sich beispielsweise um einen Ultraschall- oder Radarsensor oder einen optoelektronischen Sensor handeln kann, erkannt und verfolgt werden sollen. Dazu werden aus den Rohdatenelementen Objekte erzeugt, die den erfassten Gegenständen entsprechen sollen. Es ist also notwendig, Bildpunkte bzw. Rohdatenelemente, die Gegenstandspunkten eines Gegenstands entsprechen, einem Objekt zuzuordnen, das dem Gegenstand entspricht. Insbesondere bei nahe beieinander liegenden Gegenständen kann es sich jedoch als schwierig erweisen, die Bildpunkte bzw. Rohdatenelemente den Objekten zuzuordnen.

Die Publikationen "Model Based Object Classification and Object Tracking in Traffic Scenes from Range Images", Klaus C.J. Dietmayer et al., Proceedings IV 2001 IEEE Intelligent Vehicles Symposium, Mai 2001, Tokio, Japan, "Lane Detection and Street Type Classification using Laser Range Images", Jan Sparbert et al., 2001 IEEE Intelligent Transportation Systems Conference Proceedings, August 2001, Oakland, CA, USA, "Laser Scanners for Obstacle Detection in Automotive Applications", Andreas Ewald et al., Proceedings of the IEEE Intelligent Vehicles Symposium 2000, Dearborn, MI, USA, "Der Laserscanner als intelligenter Kfz-Sensor", Alexander Kirchner et al., atp 8/98, und "Object Detection with Laser Scanners for Automotive Applications", Andreas Ewald et al., IFAC Control in Transportation Systems, 2000, Braunschweig, Deutschland sowie die Druckschrift US 5,806,019 beschreiben jeweils, dass die Rohdatenelemente segmentiert werden, wobei zwei Rohdatenelemente, die nahe beieinander liegen oder deren gegenseitiger Abstand einen bestimmten Wert unterschreitet, demselben Segment oder Block zugeordnet werden.

Es ist Aufgabe der vorliegenden Erfindung, ein gattungsgemäßes Verfahren bereitzustellen, das die Zuordnung von Rohdatenelementen zu Objekten, die Gegenständen entsprechen, erleichtert.

Die Aufgabe wird gelöst durch ein gattungsgemäßes Verfahren mit den Merkmalen des kennzeichnenden Teils des Anspruchs 1.

Bei den Sensoren kann es sich beispielsweise um Ultraschall- oder Radarsensoren handeln. Bevorzugt werden jedoch optoelektronische Sensoren.

Unter einem tiefenaufgelösten Bild eines Sensors wird dabei eine Menge von bei einer Abtastung des Sichtbereichs des Sensors erfassten Bildpunkten verstanden, denen Punkte bzw. je nach Auflösung des Sensors auch Bereiche eines von dem Sensor erfassten Gegenstands entsprechen, wobei den Bildpunkten der Lage der zugehörigen Gegenstandspunkte entsprechende Koordinaten in wenigstens zwei Dimensionen zugeordnet sind, die sich nicht beide senkrecht zur Blickrichtung des Sensors erstrecken. Tiefenaufgelöste Bilder enthalten daher unmittelbar auch eine Information über die Entfernung der den Bildpunkten entsprechenden Gegenstandspunkte von dem Sensor. Den Bildpunkten können auch alternativ oder zusätzlich Daten über optische Eigenschaften der Gegenstandspunkte, beispielsweise Reflektivitäten und/oder Farben, zugeordnet sein.

Sensoren für elektromagnetische Strahlung zur Erfassung solcher tiefenaufgelöster Bilder sind grundsätzlich bekannt. Bei diesen kann es sich bevorzugt um optoelektronische Sensoren handeln, die eine gute Ortsauflösung bieten und daher für das erfindungsgemäße Verfahren bevorzugt sind. So können beispielsweise Systeme mit Stereo-Videokameras verwendet werden, die eine Einrichtung zur Umsetzung der von den Kameras aufgenommenen Rohdaten in tiefenaufgelöste Bilder aufweisen.

Vorzugsweise werden jedoch Laserscanner verwendet, die bei einer Abtastung einen Sichtbereich mit mindestens einem gepulsten Strahlungsbündel abtasten, das einen vorgegebenen Winkelbereich überstreicht und von einem Punkt bzw. Bereich eines Gegenstands, meist diffus, reflektierte Strahlungspulse des Strahlungsbündels detektieren. Dabei wird zur Entfernungsmessung die Laufzeit der ausgesandten, reflektierten und detektierten Strahlungspulse erfasst. Die so erfassten Rohdaten für einen Bildpunkt können dann als Koordinaten den Winkel, bei dem der Reflex erfasst wurde, und die aus der Laufzeit der Strahlungspulse bestimmte Entfernung des Gegenstandspunkts enthalten. Bei der Strahlung kann es sich insbesondere um sichtbares oder infrarotes Licht handeln.

Unter dem Sichtbereich wird im folgenden der tatsächlich von dem Sensor abgetastete Bereich verstanden, der kleiner sein kann als der maximal abtastbare Bereich.

Erfindungsgemäß werden zwischen den Rohdatenelementen des Bildes Beziehungen ermittelt und die Rohdatenelemente auf der Basis der Beziehungen nach wenigstens einem vorgegebenen Kriterium zu einem oder mehreren Segmenten zusammengefasst, wobei die Beziehungen und/oder das Kriterium von wenigstens einem Segmentierungsparameter abhängen.

Bei der Erfindung ist vorgesehen, dass die Rohdatenelemente die Position eines Gegenstandspunkts und dessen Reflektivität umfassen und zur Segmentierung die Beziehungen zwischen Rohdatenelementen Unterschiede in den Reflektivitäten von je zwei Gegenstandspunkten umfassen. Hierdurch können auch Segmente voneinander getrennt werden, die sich aufgrund einer begrenzten räumlichen Auflösung allein nicht mehr trennen lassen. Weiterhin ist es möglich eine Segmentierung allein aufgrund der Reflektivitäten vorzunehmen.

Bei einer solchen Beziehung zwischen den Rohdatenelementen kann es sich zusätzlich um Abstände der Positionen der Rohdatenelemente, die die Positionen der Gegenstandspunkte, die den Rohdatenelementen entsprechen, wiedergeben, oder um Abweichungen anderer Eigenschaften der Gegenstandspunkte voneinander handeln, deren Werte in den Rohdatenelementen enthalten sind. Hierbei ist insbesondere an optische Eigenschaften eines Gegenstandspunkts zu denken. Die Eigenschaft eines Gegenstandspunktes kann aber beispielsweise auch eine Relativgeschwindigkeit zu einem Radarsensor umfassen, wobei dann als Segmentierungskriterium Differenzen von Relativgeschwindigkeiten zu einem Radarsensor verwendet werden.

Durch eine Bewertung der Beziehung nach wenigstens einem vorgegebenen Kriterium können die Rohdatenelemente dann zu einem oder mehreren Segmenten zusammengefasst werden. Insbesondere kann dabei ein Segment auch nur ein Rohdatenelement umfassen.

Die Beziehungen und/oder das Kriterium hängen dabei von wenigstens einem Segmentierungsparameter ab, bei dem es sich beispielsweise bei einem Vergleich von Eigenschaften um einen Wert für den für eine Segmentzugehörigkeit noch zulässigen Unterschied handeln kann.

Betreffen die Beziehungen der Rohdatenelemente eine Ähnlichkeit der Gegenstandspunkte in einer bestimmten Eigenschaft, die in den Rohdatenelementen erfasst ist, kann als Kriterium insbesondere gefordert werden, dass die Rohdatenelemente in bezug auf die bestimmte Eigenschaft eine maximale Abweichung voneinander aufweisen. Hierbei kann es sich insbesondere um die Lage, die Relativgeschwindigkeit zu dem Sensor oder, wie oben genannt, um optische Eigenschaften handeln. Durch diese Zusammenfassung zu Segmenten wird eine erste Reduktion der Datenmenge erreicht, die eine Weiterverarbeitung wesentlich erleichtert, da für viele Anwendungen nur noch eine Behandlung der ganzen Segmente relevant ist. Insbesondere im Zusammenhang mit Objekterkennungs- und -verfolgungsverfahren kann einfacher überprüft werden, ob die gefundenen Segmente einzeln oder in Gruppen bestimmten Objekten entsprechen.

Weiterbildungen und bevorzugte Ausführungsformen der Erfindung sind in der Beschreibung, den Ansprüchen und den Zeichnungen beschrieben.

Es ist bevorzugt, dass die Beziehungen zwischen Rohdatenelementen räumliche Element-Element-Abstände der Positionen je zweier Rohdatenelemente umfassen und eine Segmentzugehörigkeit eines Rohdatenelements nur festgestellt wird, wenn zumindest der Element-Element-Abstand der Position des Rohdatenelements von der Position wenigstens eines anderen, dem Segment zuzuordnenden Rohdatenelements dem Wert eines entsprechenden Segmentierungsparameters, der auch als Trennparameter bezeichnet wird, unterschreitet. Das in dieser Weiterbildung verwendete Abstandskriterium bildet im allgemeinen nur eine notwendige Bedingung für eine Segmentzugehörigkeit, die nur hinreichend ist, wenn keine andere Beziehung zur Bestimmung einer Segmentzugehörigkeit verwendet wird. Diese räumliche bzw. flächenmäßige Beziehung zwischen Rohdatenelementen berücksichtigt, dass Gegenstände für die meisten Anwendungen durch ihren räumlichen Zusammenhang definiert sind. Insbesondere im Zusammenhang mit einem Verfahren zur Objekterkennung und -verfolgung stellt der Element-Element-Abstand eine sehr aussagekräftige Beziehung zwischen den Rohdatenelementen dar.

Als Element-Element-Abstand der Positionen zweier Rohdatenelemente kann hierbei insbesondere eine nichtnegative Funktion der Koordinaten der Positionen der beiden Rohdatenelemente verwendet werden, deren Werte grundsätzlich positiv sind und die den Wert Null nur dann annimmt, wenn die Positionen, das heißt die Koordinaten, identisch sind.

Besonders bevorzugt werden zur Ermittlung des Element-Element-Abstands zweier Rohdatenelemente eine Abstandsfunktion der Differenzen von Koordinaten der Rohdatenelemente und als weiterer Segmentierungsparameter ein Gewichtungsparameter verwendet, wobei die Differenzen in verschiedenen Koordinatenrichtungen über den Gewichtungsparameter relativ zueinander gewichtet werden. Hierbei kann es sich insbesondere um einen euklidischen Abstand handeln, bei dem die quadrierten Differenzen in verschiedenen Koordinatenrichtungen durch einen Gewichtungsparameter gegeneinander gewichtet sind, wodurch eine Anisotropie bei der Bewertung der Abstände erreicht wird. Diese Gewichtung bedeutet im Ergebnis, dass Rohdatenelemente, deren Positionen in einer niedrig gewichteten Richtung verglichen mit der anderen Richtung weit auseinanderliegen, trotzdem noch zu einem Segment gehören können.

Alternativ können die Beziehungen zwischen Rohdatenelementen zwei Element-Element-Abstände der Positionen umfassen, die sich jeweils auf eine der Koordinaten der Rohdatenelemente beziehen und denen jeweils ein weiterer Segmentierungsparameter zugeordnet wird, der jeweils auch als Trennparameter bezeichnet wird. Dabei wird eine Segmentzugehörigkeit eines Rohdatenelements nur festgestellt, wenn beide Element-Element-Abstände zwischen den Positionen des Rohdatenelements und der Position wenigstens eines anderen, dem Segment zuzuordnenden Rohdatenelements die Werte der entsprechenden Segmentierungsparameter unterschreiten. Wie zuvor stellen die Beziehungen bzw. die zugehörigen Kriterien nur eine notwendige Bedingung für die Segmentzugehörigkeit dar, die nur

**EP 1 267 178 B1**

dann hinreichend ist, wenn keine weiteren Beziehungen benutzt werden. Diese sich ebenfalls auf den räumlichen Zusammenhang von Gegenständen stützende Bedingung für Segmentzugehörigkeit kann insbesondere für Segmente, die auf eckige Gegenstände zurückgehen, trennschärfere Ergebnisse liefern. Weiterhin können die Trennparameter für die verschiedenen Koordinaten unterschiedlich gewählt werden, so dass auch die Abstände in verschiedenen Raumrichtungen unterschiedlich stark bewertet werden können. Bei den Element-Element-Abständen kann es sich insbesondere um den Betrag der Differenzen der jeweiligen Koordinaten handeln.

Bei den Koordinaten kann es sich grundsätzlich um beliebige, zur Bestimmung einer Position geeignete Koordinaten handeln. Abhängig von der Art der von dem Sensor ausgegebenen Koordinaten der Rohdatenelemente kann es bevorzugt sein, zur Bestimmung des Element-Element-Abstands bei der ersten oder der zweiten Alternative vor der eigentlichen Ermittlung des Element-Element-Abstands die Koordinaten in den Rohdatenelementen einer Koordinatentransformation zu unterwerfen, die durch im Zusammenhang mit den verwendeten Element-Element-Abständen günstigere Koordinaten eine trennschärfere Segmentierung erlaubt.

Bevorzugt hängt wenigstens ein Segmentierungsparameter von dem Abstand der Position wenigstens eines der beiden bei der Ermittlung der Beziehung zwischen zwei Rohdatenelementen verwendeten Rohdatenelemente zu dem Sensor und/oder der Richtung der Position relativ zu einer vorgegebenen Achse durch den Sensor ab. Hiermit kann insbesondere der Tatsache Rechnung getragen werden, dass das Auflösungsvermögen von Sensoren sich mit dem Abstand der Gegenstände und der Winkellage im Sichtbereich des Sensors ändern kann. Insbesondere bei Verwendung eines Laserscanners sinkt das Auflösungsvermögen mit zunehmendem Abstand deutlich ab, so dass vorteilhafterweise wenigstens einer der Gewichtungsparameter oder der Trennparameter eine entsprechende Abstandsabhängigkeit aufweist. Besonders bevorzugt hängt der Segmentierungsparameter von dem größeren der beiden Sensorabstände ab.

Weiterhin ist es bevorzugt, dass dem Sensor eine Achse zugeordnet ist und durch Wahl wenigstens eines entsprechenden Segmentierungsparameters Positionsdifferenzen in Richtung der Achse weniger stark berücksichtigt werden als in einer Richtung senkrecht zu der Achse. Insbesondere kann der Gewichtungsparameter bzw. der Trennparameter in Richtung der Achse kleiner gewählt werden. Ist ein Sensor und insbesondere ein Laserscanner an einem Fahrzeug angeordnet, um einen in Fahrtrichtung vor dem Fahrzeug liegenden Bereich zu überwachen, kann die Achse bevorzugt durch die Fahrtrichtung des Fahrzeugs bzw. die Fahrzeuglängsachse gegeben sein. Hierdurch lässt sich zum einen das durch die Fahrzeugbewegung bedingte geringere Auflösungsvermögen in Richtung der Achse besser berücksichtigen. Zum anderen ist es möglich, auch Segmente zu erkennen, die sich im wesentlichen in Fahrtrichtung erstrecken und denen bedingt durch die Blickrichtung nur wenige weit auseinander liegende Positionen von Rohdatenelementen zugeordnet sind.

Die obigen Ausführungen für Element-Element-Abstände gelten analog für Relativgeschwindigkeiten in Bildpunkten, die beispielsweise von einem Radarsensor erfasst wurden.

Bei alleiniger Verwendung von Reflektivitäten ist es bevorzugt, dass eines der Rohdatenelemente einem Segment nur zugeordnet wird, wenn sich die Reflektivitäten des Rohdatenelements und eines weiteren Rohdatenelements des Segments um weniger als die maximale Reflektivitätsdifferenz unterscheiden.

Besonders bevorzugt ist es, dass als weiterer Segmentierungsparameter eine maximale Reflektivitätsdifferenz verwendet wird und eines der Rohdatenelemente einem Segment nur zugeordnet wird, wenn es wenigstens einem Kriterium für einen Element-Element-Abstand oder den Kriterien für zwei Element-Element-Abstände zu mindestens einem weiteren, dem Segment zuzuordnenden Rohdatenelement genügt und wenn sich die Reflektivitäten des Rohdatenelements und des weiteren Rohdatenelements um weniger als die maximale Reflektivitätsdifferenz unterscheiden. Dies erlaubt es zum Beispiel, einfach nahe beieinanderliegende Gegenstände, beispielsweise eine Person vor einer Wand, auf vergleichsweise einfache Weise voneinander zu trennen.

Bei einer sehr dynamischen Umgebung kann der Fall eintreten, dass wenigstens ein Segmentierungsparameter für die gerade bestehenden Verhältnisse ungünstig gewählt ist. Daher ist es bevorzugt, dass wenigstens einer der Segmentierungsparameter situationsadaptiv angepasst wird.

Insbesondere bei Verwendung des erfindungsgemäßen Verfahrens in Zusammenhang mit einem an einem Fahrzeug angebrachten, vorzugsweise optoelektronischen Sensor zur Objekterkennung und -verfolgung wird damit die Möglichkeit geschaffen, die Segmentierung entsprechend eines augenblicklichen Zustands des Sensors und/oder der Situation in der Umgebung anzupassen. Als Merkmale der Situation können insbesondere Geschwindigkeit des Sensors, Bewegungsrichtung des Sensors und Hauptbeobachtungsbereich (region of interest) berücksichtigt werden. Hierdurch kann erreicht werden, dass auch bei wechselnden Fahrbedingungen eine sehr gute Segmentierung erreicht wird. Bei Verwendung des Verfahrens in Zusammenhang mit einem an einem Fahrzeug angebrachten Laserscanner zur Überwachung des Verkehrs vor bzw. auch neben dem Fahrzeug kann beispielsweise bei einer Änderung der Fahrtrichtung des Fahrzeugs, die zu anderen Sichtwinkeln gegenüber dem fließenden Verkehr führt, durch Änderung eines Gewichtungsparameters bzw. eines Trennparameters den veränderten Bedingungen Rechnung getragen werden. Auch kann die Größe einer maximalen Reflektivitätsdifferenz beispielsweise von den Lichtbedingungen abhängig gemacht werden.

Besonders bevorzugt wird eine tatsächliche oder eine daran angenäherte Bewegung des Sensors ermittelt und wenigstens einer der Segmentierungsparameter unter Verwendung der Geschwindigkeit des Sensors adaptiert. Hierdurch ist es beispielsweise möglich, dem dann in Fahrtrichtung veränderten Auflösungsvermögen des Sensors, insbesondere eines Laserscanners, Rechnung zu tragen und eine verbesserte Segmentierung zu erreichen. Insbesondere kann auch gegebenenfalls bei höherer Geschwindigkeit durch Vergrößerung der Trennparameter eine etwas grobere Segmentierung durchgeführt werden. So kommt es bei einer Objekterkennung und -verfolgung bei hohen Geschwindigkeiten nicht auf eine sehr gute Auflösung verschiedener Segmente an, da es in solchen Fahrsituationen typischerweise nicht auf Details ankommt, die bei niedrigen Geschwindigkeiten, wie zum Beispiel beim Einparken, eine größere Bedeutung haben können.

Beruht die Segmentierung auf einem Element-Element-Abstand oder einem anderen räumlichen Abstandskriterium, so hängt das Ergebnis der Segmentierung stark von der Güte der erfassten Positionen der verwendeten Rohdatenelemente ab. Wird für das erfindungsgemäße Verfahren ein Bild verwendet, das dadurch erhalten wurde, dass bei einer Abtastung des Sichtbereichs des Sensors die Rohdatenelemente nacheinander erfasst wurden, wie es beispielsweise bei einem Laserscanner der oben genannten Art der Fall ist, können bei einer hohen Eigengeschwindigkeit des Sensors die Positionen von Rohdatenelementen, die gegen Ende der Abtastung hin erfasst wurden, aufgrund der Eigenbewegung des Sensors gegenüber den Positionen der Rohdatenelemente, die zu Beginn einer Abtastung erfasst wurden, verschoben sein. Es kann daher passieren, dass einem Gegenstand entsprechende Rohdatenelemente aufgrund der Verschiebung als nicht zu einem Segment zugehörig erkannt werden, was die nachfolgende Verarbeitung wesentlich erschweren kann. In diesem Fall ist es daher bevorzugt, dass vor der Segmentbildung die Position der Rohdatenelemente jeweils entsprechend der tatsächlichen oder einer daran angenäherten Bewegung des Sensors und der Differenz zwischen den Erfassungszeitpunkten der jeweiligen Rohdatenelemente und einem Bezugszeitpunkt korrigiert werden. Die Bewegung des Sensors kann dabei zum Beispiel je nach Güte der Korrektur über dessen Geschwindigkeit oder auch über dessen Geschwindigkeit und Beschleunigung berücksichtigt werden, wobei hierbei vektorielle Größen, das heißt Größen mit Betrag und Richtung, gemeint sind. Die Daten über diese kinematischen Größen können zum Beispiel eingelesen werden. Ist der Sensor an einem Fahrzeug angebracht, so können zum Beispiel über entsprechende Fahrzeugsensoren die Eigengeschwindigkeit des Fahrzeugs und der Lenkwinkel oder die Gierrate verwendet werden, um die Bewegung des Sensors zu spezifizieren. Dabei kann zur Berechnung der Bewegung des Sensors aus den kinematischen Daten eines Fahrzeugs auch dessen Position an dem Fahrzeug berücksichtigt werden. Die Bewegung des Sensors bzw. die kinematischen Daten können jedoch auch aus einer entsprechenden parallelen Objekterkennung und -verfolgung in dem Sensor oder einer nachfolgenden Objekterkennung bestimmt werden. Weiterhin kann ein GPS-Positionserkennungssystem bevorzugt mit digitaler Karte verwendet werden.

Vorzugsweise werden kinematische Daten verwendet, die in zeitlicher Nähe zu der Abtastung und besonders bevorzugt während der Abtastung durch den Sensor erfasst werden.

Zur Korrektur können bevorzugt aus den kinematischen Daten der Bewegung und der Zeitdifferenz zwischen dem Erfassungszeitpunkt des jeweiligen Rohdatenelements und einem Bezugszeitpunkt mit geeigneten kinematischen Formeln die durch die Bewegung innerhalb der Zeitdifferenz verursachten Verschiebungen berechnet und die Koordinaten in den Rohdatenelementen entsprechend korrigiert werden. Grundsätzlich können jedoch auch modifizierte kinematische Beziehungen verwendet werden. Zur einfacheren Berechnung der Korrektur kann es vorteilhaft sein, die Rohdatenelemente zunächst einer Transformation, insbesondere in ein kartesisches Koordinatensystem, zu unterwerfen. Abhängig davon, in welcher Form die korrigierten Rohdatenelemente vorliegen sollen, kann eine Rücktransformation nach der Korrektur sinnvoll sein.

Ein Fehler in den Positionen der Rohdatenelemente kann auch dadurch hervorgerufen werden, dass sich zwei Objekte, von denen eines zu Beginn der Abtastung und das andere gegen Ende der Abtastung erfasst wurde, mit hoher Geschwindigkeit gegeneinander bewegen. Dies kann dazu führen, dass bedingt durch die zeitliche Latenz zwischen den Erfassungszeitpunkten die Positionen der Objekte gegeneinander verschoben sind. Bevorzugt wird daher in dem Fall, dass ein Bild verwendet wird, das dadurch erhalten wurde, dass bei einer Abtastung des Sichtbereichs des bevorzugt optoelektronischen Sensors die Rohdatenelemente nacheinander erfasst wurden, eine Folge von Bildern erfasst und eine Objekterkennung und/oder -verfolgung auf der Basis der Rohdatenelemente der Bilder durchgeführt, wobei jedem erkannten Objekt Rohdatenelemente und jedem dieser Rohdatenelemente bei der Objektverfolgung berechnete Bewegungsdaten zugeordnet und vor der Segmentbildung die Positionen der Rohdatenelemente unter Verwendung der Ergebnisse der Objekterkennung und/oder -verfolgung korrigiert werden. Bei der Objekterkennung und/oder -verfolgung für jede Abtastung können bekannte Verfahren benutzt werden, wobei grundsätzlich schon vergleichsweise einfache Verfahren ausreichen.

Auch durch diese Korrektur wird die Gefahr herabgesetzt, dass einem Gegenstand entsprechende Rohdatenelemente aufgrund der Verschiebung als nicht zu einem Segment zugehörig erkannt werden, was die nachfolgende Verarbeitung wesentlich erschweren würde.

Besonders bevorzugt werden bei der Bildung der korrigierten Positionen in den Rohdatenelementen die Koordinaten der Rohdatenelemente entsprechend der ihnen zugeordneten Bewegungsdaten und der Differenz zwischen einer Erfassungszeit der Rohdatenelemente und einem Bezugszeitpunkt korrigiert. Bei den Bewegungsdaten kann es sich wiederum insbesondere um kinematische Daten handeln, wobei die zur Korrektur verwendeten Verschiebungen wie oben aus den vektoriellen Geschwindigkeiten und gegebenenfalls Beschleunigungen der Objekte und der Zeitdifferenz zwischen der Erfassungszeit eines Rohdatenelements und dem Bezugszeitpunkt erfolgt.

Selbstverständlich können die genannten Korrekturen alternativ oder kumulativ angewendet werden.

Bei diesen Korrekturverfahren können, wenn nicht zu hohe Anforderungen an die Genauigkeit der Korrektur gestellt werden, Näherungen für die Erfassungszeit der Rohdatenelemente verwendet werden. Insbesondere bei Verwendung eines Laserscanners der oben genannten Art kann davon ausgegangen werden, dass aufeinanderfolgende Rohdatenelemente in konstanten zeitlichen Abständen erfasst wurden. Aus der Zeit für eine Abtastung bzw. der Abtastfrequenz und der Anzahl der dabei aufgenommenen Rohdatenelemente lässt sich damit der zeitliche Abstand aufeinanderfolgender Erfassungen von Rohdatenelementen und mittels dieses zeitlichen Abstandes und der Reihenfolge der Rohdatenelemente eine Erfassungszeit bezogen auf das erste Rohdatenelement bzw., wenn auch negative Zeiten verwendet werden, auf ein beliebiges Rohdatenelement bestimmen. Obwohl der Bezugszeitpunkt grundsätzlich frei gewählt werden kann, ist es bevorzugt, dass er für jede Abtastung zwar getrennt, aber jeweils gleich gewählt wird, da dann auch nach einer Vielzahl von Abtastungen keine Differenzen großer Zahlen auftreten und weiterhin keine Verschiebung der Positionen durch Variation des Bezugszeitpunkts aufeinanderfolgender Abtastungen bei bewegtem Sensor erfolgt, was eine nachfolgende Objekterkennung und -verfolgung erschweren könnte.

Besonders bevorzugt ist es dabei, dass der Bezugszeitpunkt zwischen der frühesten als Erfassungszeit definierten Zeit eines Rohdatenelements einer Abtastung und der zeitlich letzten als Erfassungszeit definierten Zeit eines Rohdatenelements der Abtastung liegt. Hierdurch wird gewährleistet, dass Fehler, die durch die Näherung in der kinematischen Beschreibung entstehen, möglichst gering gehalten werden. Besonders vorteilhaft kann als Bezugszeitpunkt ein Erfassungszeitpunkt eines der Rohdatenelemente der Abtastung gewählt werden, so dass dieses als Erfassungszeit innerhalb der Abtastung die Zeit Null erhält.

Eine Segmentierung kann weiterhin dadurch behindert werden, dass Objekte sich gegenseitig verdecken. Bedingt durch die Tiefenauflösung der Bilder stellt eine Verdeckung zunächst kein Problem dar. Jedoch kann es passieren, dass bei der Erfassung eines Gegenstandspunktes der Laserstrahl des Laserscanners teilweise von dem hinteren Gegenstand und teilweise von dem vorderen Gegenstand reflektiert wird, das heißt genau eine Kante des vorderen Gegenstands trifft. Bestimmt der Laserscanner die Entfernung durch die Laufzeit von Pulsen, kann es vorkommen, dass die beiden Pulse sich überlagern und als Position des entsprechenden Rohdatenelements eine Position an einer Stelle zwischen der Fläche des hinteren Gegenstands und der Fläche des vorderen Gegenstands entsteht. Dieser Punkt entspricht jedoch nicht einem realen Gegenstandspunkt und kann daher die Segmentierung verfälschen. Dieses Phänomen tritt nur auf, wenn die Gegenstände entlang dieser Richtung weiter voneinander entfernt sind, als die durch die Pulsdauer des Laserpulses bestimmte räumliche Ausdehnung des Laserpulses in Strahlrichtung. Das Auftreten solcher Konstellationen wird auch als das Auftreten von virtuellen Gegenstandspunkten, Geistermessungen oder Abrisskanten bezeichnet.

Zur Korrektur solcher Phänomene ist es bevorzugt, dass zur Erkennung eines einem virtuellen Gegenstandspunkt entsprechenden Rohdatenelements in einem vorgegebenen Winkelbereich des Sichtbereichs, das durch eine gleichzeitige Erfassung von zwei in dem Bild hintereinanderliegenden Gegenständen erhalten wurde, auf die Rohdatenelemente, die in dem Winkelbereich liegen, ein Gradientenfilter angewendet wird, der jeweils den Rohdatenelementen zugeordnete Elementgradienten verwendet, die Gradienten des radialen Abstands der Position des Rohdatenelements von dem Sensor in bezug auf den Winkel der Position zu einer vorgegebenen Achse durch den Sensor entsprechen.

Hierbei wird ausgenutzt, dass auftretende virtuelle Gegenstandspunkte vergleichsweise große Abstände zu benachbarten Gegenstandspunkten aufweisen. Da die Rohdatenelemente und damit die Positionen nur diskret erfasst werden, sind kontinuierliche Gradienten des Abstands im mathematischen Sinne naturgemäß nicht erfassbar, so dass näherungsweise diesen Gradienten entsprechende Elementgradienten verwendet werden. Hierbei kann es sich insbesondere um rechtsseitige oder linksseitige Differenzquotienten handeln.

Vorzugsweise wird dazu noch überprüft, ob der Abstand der der Geistermessung benachbarten Gegenstands- bzw. Bildpunkte voneinander kleiner ist als die räumliche Länge des Laserpulses. Die räumliche Länge des Laserpulses ist aus der Pulsdauer und der Lichtgeschwindigkeit in Luft berechenbar.

Liegen die Koordinaten von Positionen der Rohdatenelemente als Polarkoordinaten vor, so ist die Ermittlung der Elementgradienten besonders einfach. Insbesondere bei von Laserscannern erfassten tiefenaufgelösten Bildern sind die Winkelabstände aufeinanderfolgender Rohdatenelemente in der Regel im wesentlichen konstant sind. Daher genügt es, nur Differenzen der Abstände zu betrachten, da die Division durch das Winkelinkrement nur eine Normierung darstellt. Es können auch kartesische Koordinaten verwendet werden, aus denen mittels bekannter Formeln entsprechende Elementgradienten gebildet werden können.

Besonders bevorzugt ist es daher, dass die Elementgradienten durch Bildung der Differenz zweier Abstandswerte ermittelt werden, die in bezug auf die Winkel aufeinanderfolgen, und dass ein einem virtuellen Gegenstandspunkt entsprechendes Rohdatenelement nur ermittelt wird, wenn der Betrag eines Elementgradienten, der unter Verwendung des Rohdatenelements ermittelt wurde, einen ersten Schwellwert überschreitet und die Änderung der Elementgradienten der Abstandswerte von zu dem Rohdatenelement benachbarten aufeinanderfolgenden Rohdatenelementen oberhalb eines zweiten Schwellwerts liegt oder für dieses Rohdatenelement der Betrag der Änderung des Elementgradienten einen Schwellwert übersteigt.

Zu dieser Bedingung können noch weitere Bedingungen, die die Erkennungsgenauigkeit verbessern, kumulativ hinzukommen. Besonders bevorzugt können noch Vorzeichenwechsel aufeinanderfolgender Elementgradienten überwacht werden. Durch die Verwendung von Gradientenfiltern dieser Art ist es insbesondere möglich, einen virtuellen Gegenstandspunkt bzw. eine Abrisskante von einer in dem tiefenaufgelösten Bild sehr schräg stehenden Fläche, wie sie beispielsweise auf einer Fahrbahn durch einen in Fahrtrichtung des Sensors schräg vor diesem fahrenden Bus gegeben sein kann, zu unterscheiden. Der Vorteil dieser Behandlung der Rohdatenelemente besteht darin, dass auf einfache Weise ohne zusätzliche Informationen von dem optoelektronischen Sensor virtuelle Gegenstandspunkte bzw. Abrisskanten erkannt und korrigiert werden können.

Die Korrektur kann dabei bevorzugt dadurch erfolgen, dass ein Rohdatenelement, das einem virtuellen Gegenstandspunkt entspricht, aus der Menge der Rohdatenelemente entfernt wird. Vorzugsweise wird dann eine entsprechende Kennzeichnung angebracht, um im weiteren Verlauf des Verfahrens feststellen zu können, dass ein Rohdatenelement entfernt wurde. Dieses Vorgehen empfiehlt sich besonders dann, wenn die benachbarten Gegenstandsflächen sehr unregelmäßig sind.

Befinden sich jedoch rechts und links der Abrisskante ebene oder nicht stark gekrümmte oder nicht extrem stark geneigte Flächen, so ist es bevorzugt, dass ein Rohdatenelement, das einem virtuellen Gegenstandspunkt entspricht, durch wenigstens ein Rohdatenelement ersetzt wird, das den gleichen Winkel aufweist, wobei dem Rohdatenelement als Abstand ein aus wenigstens einem in bezug auf den Winkel benachbarten Rohdatenelement mit kleinerem oder größerem Winkel bestimmter Abstand zugeordnet wird. Hiermit wird das ersetzende Rohdatenelement einer der Flächen als Ersatz-Rohdatenelement verwendet, so dass die anschließende Segmentierung genauere Resultate liefert.

Vorzugsweise kann das Rohdatenelement auch durch zwei Rohdatenelemente ersetzt werden, die den gleichen Winkel aufweisen, wobei dem ersten dieser Rohdatenelemente als Abstand ein aus wenigstens einem benachbarten Rohdatenelement mit kleinerem Winkel bestimmter Abstand und dem zweiten Rohdatenelement als Abstand ein aus wenigstens einem benachbarten Rohdatenelement mit größerem Winkel bestimmter Abstand zugeordnet wird. Dies bedeutet im Ergebnis, dass die Flächen der beiden sich verdeckenden Gegenstände bis zur Kante ergänzt werden.

Hierzu ist es bei beiden Möglichkeiten besonders bevorzugt, dass der zuzuordnende Abstand durch Extrapolation der Abstände der benachbarten Rohdatenelemente bestimmt wird. Hierdurch ergeben sich besonders glatte korrigierte Flächen der sich verdeckenden Gegenstandsbereiche.

Die Erkennung von virtuellen Gegenstandspunkten ist in der deutschen Patentanmeldung mit dem amtlichen Aktenzeichen 101 32 335.2, die von der Anmelderin der vorliegenden Anmeldung am 4.7.2001 eingereicht wurde und deren in Inhalt durch Bezugsnahme in die vorliegenden Anmeldung aufgenommen wird, beschrieben

Bevorzugt können die Rohdatenelemente Reflektivitätswerte enthalten, so dass zur Ermittlung eines virtuellen Gegenstandspunkts Gradienten der Reflektivitäten verwendet werden. In bezug auf die Gradienten gilt hier das gleiche wie bei den Abständen, da auch die Reflektivitätswerte in diskreten Winkelabständen erfasst werden. Die Auswertung der Reflektivitätswerte kann alternativ zu der Auswertung der Abstände erfolgen oder auch in Verbindung mit der Abstandsauswertung.

Bevorzugt wird zur Ermittlung eines virtuellen Gegenstandspunkts bzw. einer Geistermessung ein Gradientenfilter verwendet, wie er in bezug auf die Abstände beschrieben wurde.

Nach der Bildung der Segmente werden diesen bevorzugt weitere Eigenschaften zugeordnet.

Besonders bevorzugt ist es, dass die Rohdatenelemente einen Neigungswinkel enthalten, der einem Winkel zwischen der Achse des von dem Sensor erfassten, von dem dem Rohdatenelement entsprechenden Gegenstandspunkt ausgehenden Strahlungsbündels und der Normalen auf eine Fläche eines Gegenstands entspricht, die das Strahlungsbündel reflektiert hat, und dass einem Segment als Segmenteigenschaft ein Neigungswinkel zugeordnet wird, der in Abhängigkeit von den Neigungswinkeln der das Segment bildenden Rohdatenelemente ermittelt wird.

Ein solcher Neigungswinkel ist insbesondere mit einem Laserscanner der oben genannten Art erfassbar, wenn die Breiten der empfangenen Pulse mit denen der ausgesandten Pulse verglichen werden. Denn die reflektierten Pulse weisen eine größere Breite auf, die dadurch bedingt ist, dass aufgrund der Neigung näher an dem Sensor gelegene Gegenstandsbereiche Teile des Strahlungspulses früher reflektieren als die aufgrund der Neigung etwas weiter entfernten Bereiche, wodurch die Pulsbreite insgesamt vergrößert wird. Anhand solcher Neigungswinkel können bestimmte Typen von Objekten, insbesondere zum Beispiel Rampen oder Steigungen auf einer Straße, einfach erkannt werden.

Durch die Vielzahl der Eigenschaften kann eine spätere Zuordnung zu Objekten erheblich erleichtert werden.

Weiterhin ist es bevorzugt, dass für mindestens ein Segment mehrere, besonders bevorzugt mindestens vier, Eigenschaften ausgewählt aus der Gruppe Koordinaten eines Bezugspunkts, insbesondere des Schwerpunkts des Segments, Breite des Segments, Länge des Segments, Reflektivität des Segments, Neigungswinkel des Segments, Anzahl der Rohdatenelemente des Segments und Alter des Segments ermittelt und diesem zugeordnet werden. Vorzugsweise werden 5 oder mehr dieser Eigenschaften ermittelt und dem Segment zugeordnet.

Bei dem Bezugspunkt kann es sich um einen beliebigen, aber relativ zu dem Segment fest vorgegebenen Punkt handeln. Bei dem Schwerpunkt des Segments kann es sich um den geometrischen Schwerpunkt des Segments handeln. Weiterhin werden als Breite und Länge des Segments Breite und Länge von Rechtecken verstanden, die das Segment so umschließen, dass auf wenigstens zwei der Seiten des Rechtecks mindestens ein Punkt des Segments liegt. Unter dem Alter des Segments wird eine aus den Erfassungszeiten der dem Segment zugehörigen Rohdatenelemente entsprechende Größe verstanden.

Weiterhin können bevorzugt die Rohdatenelemente eine Höheninformation enthalten, wobei die Höheninformation zur Segmentierung verwendet wird. Unter Höhe wird dabei die Höhe einer im wesentlichen senkrecht zur Fläche des Sichtbereichs stehenden Fläche verstanden, die beispielsweise mit einem mehrzeiligen, gleichzeitig eine Abtastung in mehreren übereinander liegenden Abtastebenen durchführenden Laserscanner erfasst werden kann. Diese weitere Rohdatenelementinformation kann zu einer noch besseren Segmentierung verwendet werden, da Segmente zusätzlich durch die Höhe definierbar sind. Das Vorgehen bei der Segmentierung in bezug auf die Höhe entspricht im wesentlichen dem beim Abstand, wobei beispielsweise ein dreidimensionaler Element-Element-Abstand verwendet werden kann.

Für den Fall, dass die Rohdatenelemente eine Höheninformation enthalten, ist es bevorzugt, dass für ein Segment als Eigenschaft in Abhängigkeit von den Höhen der dieses Segment bildenden Rohdatenelemente eine Segmenthöhe ermittelt und diesem zugeordnet wird. Auch diese Segmenteigenschaft kann in einem späteren Verarbeitungsschritt des Bildes beispielsweise für eine Objekterkennung verwendet werden.

Das erfindungsgemäße Verfahren wird bevorzugt für ein Verfahren zur Objekterkennung und -verfolgung auf der Basis tiefenaufgelöster Bilder eines Sichtbereichs verwendet, wobei die Bilder von einem optoelektronischen Sensor, insbesondere einem Laserscanner, bei einer Abtastung seines Sichtbereichs erfasst wurden.

Weiterer Gegenstand der Erfindung ist ein Computerprogramm mit Programmcode-Mitteln, um das erfindungsgemäße Verfahren durchzuführen, wenn das Programm auf einem Computer bzw. einer Datenverarbeitungsanlage ausgeführt wird.

Gegenstand der Erfindung ist ferner ein Computerprogrammprodukt mit Programmcode-Mitteln, die auf einem computerlesbaren Datenträger gespeichert sind, um das erfindungsgemäße Verfahren durchzuführen, wenn das Computerprogrammprodukt auf einem Computer ausgeführt wird.

Unter einem Computer wird hierbei eine beliebige Datenverarbeitungsvorrichtung verstanden, mit der das Verfahren ausgeführt werden kann. Insbesondere kann diese einen digitalen Signalprozessor und/oder Mikroprozessor aufweisen, mit dem das Verfahren ganz oder in Teilen ausgeführt wird.

Weiterer Gegenstand der Erfindung ist ein Verfahren zur Erkennung und Verfolgung von Gegenständen in einem Sichtbereich eines Sensors, insbesondere eines Laserscanners, bei dem mit dem Sensor zeitlich aufeinanderfolgend tiefenaufgelöste Bilder wenigstens eines Teils seines Sichtbereichs erfasst werden, und bei dem die erfassten Bilder mit dem erfindungsgemäßen Verfahren zur Verarbeitung eines tiefenaufgelösten Bildes verarbeitet werden.

Außerdem ist Gegenstand der Erfindung eine Vorrichtung zur Erzeugung eines Modells eines Überwachungsbereichs mit mindestens einem Sensor für elektromagnetische Strahlung, vorzugsweise einem optoelektronischen Sensor, insbesondere einem Laserscanner, dessen Sichtbereich den Überwachungsbereich einschliesst, und mit einer Datenverarbeitungseinrichtung, die zur Durchführung eines erfindungsgemäßen Verfahrens ausgebildet ist.

Bevorzugt weist die Datenverarbeitungseinrichtung dazu einen Prozessor und eine Speichereinrichtung auf, in der ein erfindungsgemäßes Computerprogramm zur Ausführung auf dem Prozessor gespeichert ist. Die Datenverarbeitungseinrichtung kann dabei als Prozessor besonders bevorzugt einen digitalen Signalprozessor aufweisen.

Bevorzugte Ausführungsformen der Erfindung werden nun beispielhaft anhand der Zeichnungen beschrieben. Es zeigen:

Fig. 1    eine schematische Draufsicht auf eine erfindungsgemäße Vorrichtung zur Erzeugung eines Modells eines Überwachungsbereichs und einen Sichtbereich der Vorrichtung mit zwei Fahrzeugen,

Fig. 2    ein schematisches Ablaufdiagramm eines Verfahrens nach einer ersten bevorzugten Ausführungsform der Erfindung,

Fig. 3    eine schematische Draufsicht auf eine Szene mit zwei sich verdeckenden Gegenständen und einem Laserscanner,

Fig. 4    ein Diagramm zur Erläuterung eines bei dem in Fig. 2 dargestellten Verfahren verwendeten Gradientenfilters, und

Fig. 5    ein schematisches Ablaufdiagramm eines Verfahrens nach einer zweiten bevorzugten Ausführungsform der Erfindung.

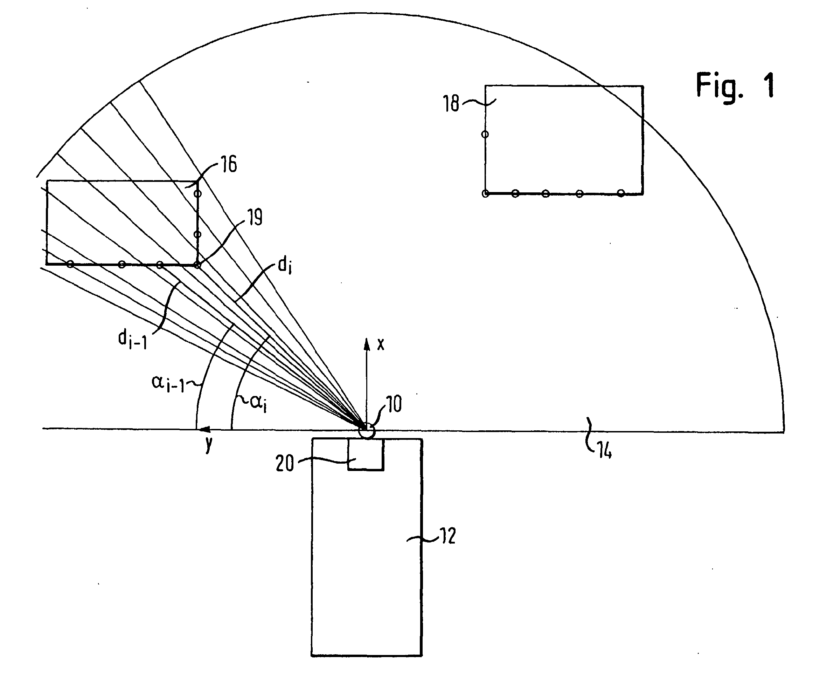

In Fig. 1 ist ein Laserscanner 10 an der Frontseite eines Kraftfahrzeugs 12 gehalten, um Gegenstände vor dem Kraftfahrzeug 12 zu erfassen.

Der Laserscanner 10 weist einen in Fig. 1 nur teilweise gezeigten Sichtbereich 14 auf, der aufgrund der Anbaulage symmetrisch zur Längsachse des Kraftfahrzeugs 12 einen Winkel von etwa 180° abdeckt. Dieser Sichtbereich entspricht auch dem Überwachungsbereich des Laserscanners 10. Der Sichtbereich ist in Fig. 1 nur schematisch und zur besseren Darstellung insbesondere in radialer Richtung zu klein dargestellt. In dem Sichtbereich 14 befinden sich beispielhaft zwei Fahrzeuge 16 und 18 als zu erfassende Gegenstände.

Der Laserscanner 10 tastet seinen Sichtbereich 14 in grundsätzlich bekannter Weise mit einem mit konstanter Winkelgeschwindigkeit umlaufenden, gepulsten Laserstrahlungsbündel ab, wobei ebenfalls umlaufend in konstanten Zeitabständen $\Delta t$ zu Zeiten $\tau_i$ in festen Winkelbereichen um einen mittleren Winkel $\alpha_i$ detektiert wird, ob das Strahlungsbündel von einem Punkt bzw. Bereich eines Gegenstands reflektiert wird. Der Index i läuft dabei von 1 bis zur Anzahl der Winkelbereiche im Sichtbereich. Von diesen Winkelbereichen sind in Fig. 1 nur einzelne gezeigt, unter anderem die den mittleren Winkeln $\alpha_{i-1}$, $\alpha_i$ und $\alpha_{i+1}$ zugeordneten Winkelbereiche. Hierbei sind die Winkelbereiche zur deutlicheren Darstellung übertrieben groß gezeigt. Anhand der Laufzeit des Laserstrahlpulses wird der Sensorabstand $d_i$ des Gegenstandspunktes von dem Laserscanner 10 ermittelt. Der Laserscanner 10 erfasst daher als Koordinaten in dem Rohdatenelement für den Gegenstandspunkt 19 des Kraftfahrzeugs 16 den Winkel $\alpha_i$ und den bei diesem Winkel festgestellten Abstand $d_i$, das heißt die Position des Gegenstandspunkts 19 in Polarkoordinaten.

Weiterhin erfasst der Laserscanner 10 auch die Reflektivität $R_i$ des Gegenstandspunktes 19 in dem Rohdatenelement für den Gegenstandspunkt 19. Bei einer Abtastung des Sichtbereichs werden von dem Laserscanner 10 somit Rohdatenelemente mit Koordinaten ($\alpha_i$, $d_i$) und Reflektivität $R_i$ bereitgestellt, wobei i eine natürliche Zahl zwischen 1 und der Anzahl der von dem Laserscanner 10 erfassten Rohdatenelemente ist.

Die Menge der bei einer Abtastung erfassten Rohdatenelemente bildet ein tiefenaufgelöstes Bild im Sinne der vorliegenden Anmeldung.

Der Laserscanner 10 tastet seinen Sichtbereich 14 jeweils in aufeinanderfolgenden Abtastungen ab, so dass eine zeitliche Folge von Abtastungen entsteht.

Zur Verarbeitung der Rohdatenelemente weist der Laserscanner 10 eine Auswerteelektronik bzw. Datenverarbeitungseinrichtung 20 auf, die im Beispiel in dem Laserscanner 10 angeordnet ist, grundsätzlich aber auch davon abgesetzt angeordnet sein kann. Die Datenverarbeitungseinrichtung 20 weist unter anderem einen zur Ausführung des erfindungsgemäßen Verfahrens programmierten digitalen Signalprozessor und eine mit dem digitalen Signalprozessor verbundene Speichereinrichtung auf.

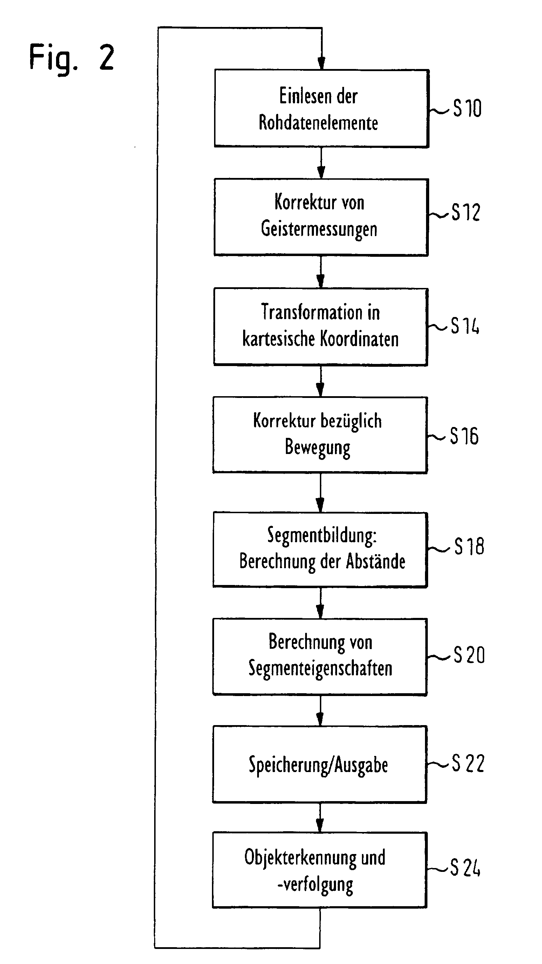

Das Verfahren nach einer bevorzugten Ausführungsform der Erfindung ist schematisch in Fig. 2 dargestellt.

Im Schritt S10 werden zunächst die Rohdatenelemente eines von dem Laserscanner 10 erfassten tiefenaufgelösten Bildes eingelesen.

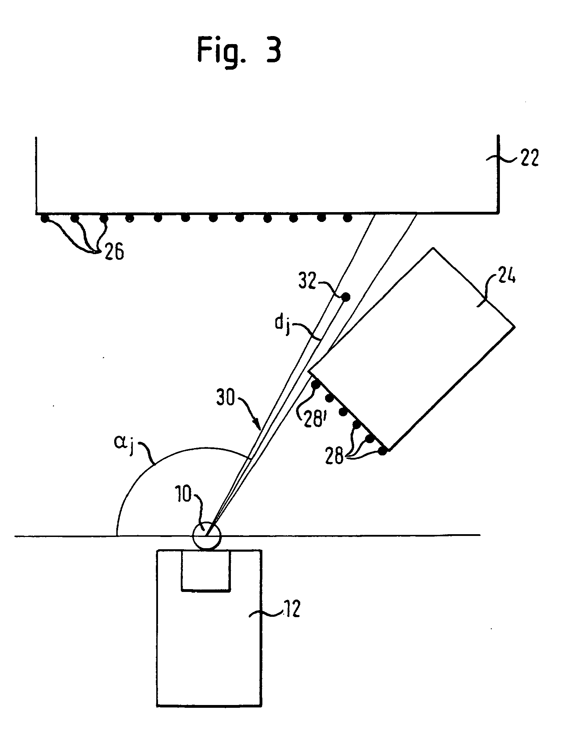

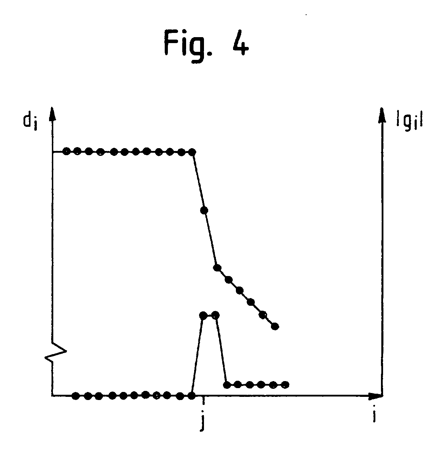

In Schritt S12 wird daraufhin das eingelesene Bild auf Geistermessungen bzw. virtuelle Gegenstandspunkte untersucht und bei Auffinden von virtuellen Gegenstandspunkten korrigiert. Das Vorgehen zur Erkennung von virtuellen Gegenstandspunkten ist beispielhaft in Fig. 3 und Fig. 4 dargestellt.

In Fig. 3 befinden sich in Fahrtrichtung vor dem Kraftfahrzeug 12 mit dem Laserscanner 10 zwei Gegenstände 22 und 24. Die Gegenstandspunkte 26 auf dem Gegenstand 22 und die Gegenstandspunkte 28 auf dem Gegenstand 24, die Rohdatenelementen in dem von dem Laserscanner 10 erfassten Bild entsprechen, sind in Fig. 3 durch schwarze Punkte gekennzeichnet. Wie in Fig. 3 leicht zu erkennen, wird durch den Gegenstand 24 der rechte Teil des Gegenstands 22 verdeckt, so dass der Laserscanner 10 in diesem Winkelbereich nur Gegenstandspunkte 28 des Gegenstands 24 erfasst. Die Gegenstandspunkte bzw. die entsprechenden Rohdatenelemente sind dabei von links nach rechts fortschreitend in konstanten Zeitabständen erfasst worden. Bei dem Winkel $\alpha_j$ hat ein gepulstes Laserstrahlungsbündel 30 des Laserscanners 10 sowohl einen Bereich des Gegenstands 22 als auch einen Bereich des Gegenstands 24 bestrahlt, so dass von beiden Gegenständen zu unterschiedlichen Zeiten reflektierte Laserstrahlungspulse sich überlagernd von dem Laserscanner 10 erfasst werden, der daraufhin diesem Winkel einen Abstand $d_j$ zuordnet, wodurch ein Rohdatenelement mit Koordinaten $\alpha_j$ und $d_j$ erzeugt wird, das einem nur virtuellen Gegenstandspunkt 32 entspricht. Diese Situation wird auch als Auftreten einer Geistermessung oder Abrisskante bezeichnet.

Der Verlauf der erfassten Abstände $d_i$ als Funktion der Winkel $\alpha_i$ ist in Fig. 4 nochmals schematisch dargestellt. Die den Gegenstandspunkten 26 entsprechenden Abstände $d_i$ sind zunächst im wesentlichen konstant und fallen dann abrupt bei dem Winkel $\alpha_j$ auf den Abstand $d_j$ und von dort weiter auf den Abstand $d_{j+1}$, der dem Gegenstandspunkt 28' an der linken Ecke des Gegenstands 24 entspricht. Aufgrund der Schräglage des Gegenstands 24 relativ zu dem Laserscanner 10 fallen dann für folgende Winkel $\alpha_i$ die Abstände $d_i$ weiter ab.

Erfindungsgemäß werden nun Elementgradienten $g_i$ gebildet, die proportional zu dem Gradienten des erfassten Abstands der Gegenstandspunkte in bezug auf den Winkel sind. Hierzu werden Differenzen aufeinanderfolgender Abstände $d_{i-1}$ und $d_i$ gebildet:

$$g_i = d_i - d_{i-1}.$$

Der Betrag der Elementgradienten $g_i$ ist in Fig. 4 ebenfalls schematisch dargestellt. Im Bereich des Winkels $\alpha_j$, das heißt des virtuellen Gegenstandspunktes 32 bzw. der Abrisskante, ist ein starkes Ansteigen des Gradienten zu erkennen. Zur Erkennung des virtuellen Gegenstandspunktes wird daher überprüft, ob der Betrag des Gradienten $g_i$ einen vorgegebenen Schwellwert $g_s$ überschreitet. Dies ist im in Fig. 3 und 4 dargestellten Beispiel für die Koordinaten mit den Winkeln $\alpha_j$ und $\alpha_{j+1}$ der Fall. Bedingt durch die Wahl der Darstellung des Elementgradienten $g_i$ durch die Differenz der Abstände $d_i$ und $d_{i-1}$ wird das Rohdatenelement mit dem Winkel $\alpha_j$ als Kandidat für einen virtuellen Gegenstandspunkt angesehen. Um den virtuellen Gegenstandspunkt 32 von einem Gegenstandspunkt einer schräg stehenden Fläche unterscheiden zu können, wird weiterhin der Betrag der Änderung des Elementgradienten $g_i$ auf das Überschreiten eines zweiten Schwellwerts $h_s$ untersucht. Genauer gesagt: es wird überprüft, ob

$$|g_i - g_{i-1}| > h_s$$

und

$$|g_{j+2} - g_{j+1}| > h_s$$

ist. Hierbei wird wiederum berücksichtigt, dass zur Bildung der Elementgradienten jeweils der vorhergehende Abstandswert und der aktuelle Abstandswert verwendet wurden. Zusätzlich kann überprüft werden, ob die bei dem Vergleich mit dem Schwellwert $h_s$ verwendeten Änderungen des Elementgradienten unterschiedliche Vorzeichen aufweisen. Ist dies der Fall, wird ein virtueller Gegenstandspunkt erkannt.

Weiterhin wird überprüft, ob der Abstand der dem virtuellen Gegenstandspunkt benachbarten Bildpunkte geringer ist als die Länge des Laserpulses. Nur in diesem Fall wird von einem tatsächlichen virtuellen Gegenstandspunkt ausgegangen.

Da ein virtueller Gegenstandspunkt erkannt wurde, wird das dem Winkel $\alpha_j$ entsprechende Rohdatenelement durch zwei Rohdatenelemente mit dem gleichen Winkel ersetzt, wobei dem einen der ersetzten Rohdatenelemente als Abstand ein sich aus den benachbarten Abständen $d_{j-1}$ und $d_{j-2}$ ergebender Abstand $d = d_{j-1} + d_{j-1} - d_{j-2}$ und dem zweiten eingefügten Datenpunkt ein Abstand $d = d_{j+1} - (d_{j+2} - d_{j+1})$ zugeordnet wird, der sich jeweils durch Extrapolation aus den benachbarten Punkten ergibt.

Nach Abschluss dieser Korrektur von Geistermessungen in Schritt S12 wird im Schritt S14 (vgl. Fig. 2) eine Transformation der Polarkoordinaten in den Rohdatenelementen in kartesische Koordinaten vorgenommen, um dann auf einfachere Weise im Schritt S16 Korrekturen von durch Bewegungen des Laserscanners 10 oder der Gegenstände 16 oder 18 hervorgerufenen Verschiebungen vornehmen zu können. Dabei wird als y-Achse die Fahrzeuglängsachse und als dazu senkrechte x-Achse die zur Fahrzeuglängsachse senkrechte Achse durch den Laserscanner 10 gewählt.

In Schritt S16 werden Fehler in den Positionen der Rohdatenelemente, die durch Bewegungen des Laserscanners 10 bzw. der Gegenstände 16 und 18 während einer Abtastung hervorgerufen werden, korrigiert.

In diesem Beispiel wird davon ausgegangen, dass der Laserscanner den Sichtbereich in $2 \cdot N + 1$ Schritten abtastet, wobei N eine natürliche Zahl, beispielsweise 180, ist. Als Bezugszeitpunkt für die Korrektur wird der Zeitpunkt der Erfassung des Rohdatenelements im Schritt $N+1$ gewählt, um Fehler bei der Korrektur zu minimieren, die durch Abweichungen der Bewegungen des Laserscanners 10 und/oder der Gegenstände 16 oder 18 von einer geradlinigen und gleichförmigen Bewegung hervorgerufen werden.

Daraufhin wird die vektorielle Geschwindigkeit für den Laserscanner 10 eingelesen. Diese Geschwindigkeit wird dabei von einem entsprechenden, in Fig. 1 nicht gezeigten Geschwindigkeitssensor des Kraftfahrzeugs 12 unter Berücksichtigung der Lage des Laserscanners 10 relativ zu dem Kraftfahrzeug 12 bestimmt. Bei einer einfachen Näherung kann die Geschwindigkeit des Laserscanners 10 durch die Fahrzeuggeschwindigkeit ohne die Berücksichtigung der Lage des Laserscanners 10 gegeben sein.

Bei dem Verfahren nach diesem Ausführungsbeispiel wird nach der Segmentierung und weiteren Schritten im Schritt S24 eine Objekterkennung und -verfolgung durchgeführt, bei der, beispielsweise mittels eines Kalman-Filters und geeigneter Modelle für die Bewegung erkannter Objekte, Schätzwerte für kinematische Daten der erkannten Objekte bestimmt werden. Zu diesen kinematischen Daten gehören neben den Positionen die Geschwindigkeiten der erkannten Objekte. Weiterhin wird bei dieser Objekterkennung und/oder -verfolgung die Zuordnung der Rohdatenelemente zu dem jeweiligen Objekt gespeichert.

In Schritt S10 wird diese Zuordnung verwendet, um den Rohdatenelementen als kinematische Daten die Geschwindigkeit der in der vorhergehenden Iteration erkannten Objekte zuzuordnen. In dem in Fig. 1 gezeigten Beispiel heißt das konkreter, dass dem Rohdatenelement für den Gegenstandspunkt 19 als Geschwindigkeit die Geschwindigkeit des dem Gegenstand 16 entsprechenden Objekts zugeordnet wird.

Anschließend wird die Differenz zwischen einer Erfassungszeit $t_i$ des Rohdatenelements i und der Bezugszeit $t_{N+1}$ berechnet. Erfolgt die Erfassung der 2N+1 Rohdatenelemente in einer Zeit T für eine Abtastung, so wird als Erfassungszeit

$$t_i = (N+1-i) \cdot T/(2 \cdot N+1)$$

definiert, so dass sich als Bezugszeit innerhalb einer Abtastung $t_{N+1}$ gleich 0 ergibt.

Daraufhin werden die Koordinaten des Rohdatenelements i um den Vektor verschoben, der sich aus der Multiplikation der zuvor für das Rohdatenelement i bestimmten Zeitdifferenz und der Summe des der Eigenbewegung des Laserscanners 10 entsprechenden Geschwindigkeitsvektors und des dem Rohdatenelement i zugeordneten Geschwindigkeitsvektors ergibt.

Diese Operationen werden für jedes der Rohdatenelemente durchgeführt.

In dem folgenden Schritt S18 wird die eigentliche Segmentbildung durchgeführt. Die Basis der Segmentbildung sind die bezüglich etwaiger virtueller Gegenstandspunkte und bezüglich der durch Bewegungen während einer Abtastung hervorgerufenen Fehler korrigierten Rohdatenelemente.

Hierbei werden als Beziehungen zwischen den Rohdatenelementen Quadrate von Abständen berechnet und auf das Überschreiten oder Unterschreiten eines entsprechend gewählten Trennparameters D überprüft.

Hierzu wird für jedes Paar von Rohdatenelementen i und j, das die korrigierten, kartesischen Koordinaten ($x_i$, $y_i$) bzw. ($x_j$, $y_j$) für die entsprechenden Positionen umfasst, der Abstand

$$d_{ij}(g) = \sqrt{(1-g)(x_i - x_j)^2 + g \cdot (y_i - y_j)^2}$$

berechnet, bei dem die Abstände in x- bzw. y-Richtung durch den zwischen 0 und 1 wählbaren Gewichtungsparameter g unterschiedlich gewichtet sind. Im einfachsten Fall ist g=0,5, d.h. Differenzen in den Koordinaten in x- und y-Richtung sind gleich stark gewichtet.

Nach Berechnung dieser Abstände für alle Paare von Rohdatenelementen werden Segmente gebildet. Ein Segment ergibt sich dabei aus einer Menge von Rohdatenelementen, von denen jedes von mindestens einem anderen Rohdatenelement der Menge einen Abstand hat, der kleiner als der Trennparameter D ist. Als Segmentierungsparameter werden in diesem Beispiel also der Trennparameter D und der Gewichtungsparameter g verwendet.

In Schritt S20 werden für diese Segmente Segmenteigenschaften berechnet. Hierbei handelt es sich insbesondere um den geometrischen Schwerpunkt der Koordinaten der Rohdatenelemente, die ein Segment bilden, um die Anzahl der das Segment bildenden Rohdatenelemente, um ein mittleres "Alter" der Segmente, das sich aus dem Mittelwert der Erfassungszeiten der das Segment bildenden Rohdatenelemente ergibt, und um eine Breite bzw. Länge des Segments. Die Breite und die Länge des Segments ergeben sich dabei in diesem Ausführungsbeispiel aus dem Rechteck kleinster Breite und kleinster Länge, das alle Rohdatenelemente, bzw. deren Koordinaten, enthält.

Im folgenden Schritt S22 werden die so berechneten Segmenteigenschaften gespeichert oder auch gegebenenfalls ausgegeben.

Im folgenden Schritt S24 wird auf der Basis dieser Segmente die oben schon erwähnte Objekterkennung und -verfolgung durchgeführt.

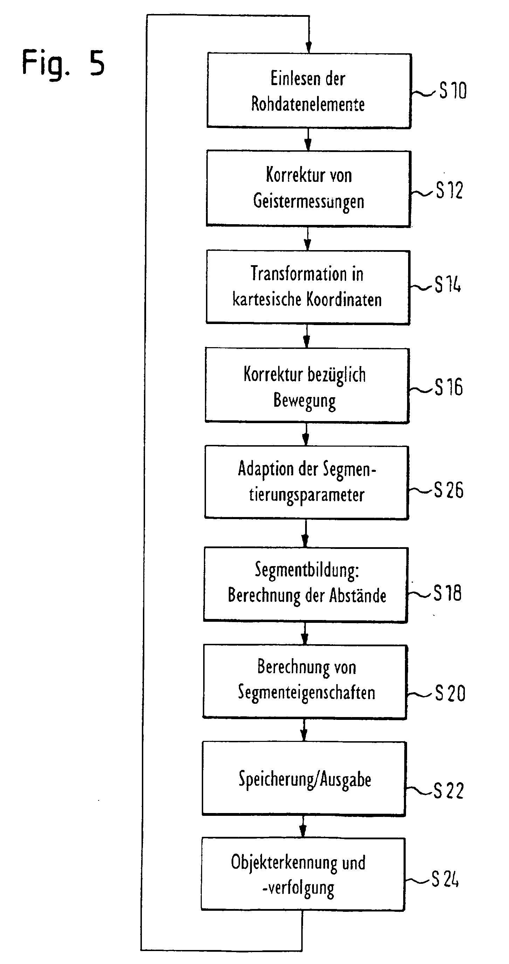

Bei einem Verfahren nach einer zweiten bevorzugten Ausführungsform der Erfindung werden in Abweichung von dem Verfahren nach der ersten bevorzugten Ausführungsform die Segmentierungsparameter, das heißt der Trennparameter D und/oder der Gewichtungsparameter g, adaptiv an die Fahrsituation angepasst. Das Verfahren ist in Fig. 5 schematisch dargestellt, wobei für gleiche Schritte die gleichen Bezugszeichen verwendet werden.

Vor der Segmentierung in Schritt S18 werden in Schritt S26 Werte von Fahrzeugparametern, z. B. dem Lenkwinkel und der Geschwindigkeit des Fahrzeugs 12, eingelesen und die Segmentierungsparameter D und g unter Verwendung einer Heuristik entsprechend angepasst.

Beispielsweise wird durch Überwachung der Größe der Lenkeinschläge und der Geschwindigkeit des Fahrzeugs 12 zwischen einer Rangiersituation, beispielsweise auf einem Parkplatz, und einer Autobahnfahrt unterschieden.

Die Rangiersituation ist dadurch gekennzeichnet, dass bei sehr niedrigen Geschwindigkeiten, beispielsweise unterhalb von 10 km/h, große Lenkwinkel, beispielsweise oberhalb von 15°, auftreten. Die Autobahnfahrt zeichnet sich demgegenüber durch hohe Geschwindigkeiten, beispielsweise über 80 km/h, und geringe Beträge der Lenkwinkel, beispielsweise unter 10°, aus.

Bei Erkennung einer Rangiersituation, bei der es darauf ankommt, Objekte möglichst genau aufzulösen, um insbesondere auch Fußgänger erkennen zu können, wird der Trennparameter D auf einen sehr geringen Abstand, beispielsweise 30 cm, eingestellt und der Gewichtungsparameter g auf den Wert 0,5 gesetzt, so dass in allen Richtungen gleichmäßig eine sehr gute Trennung zwischen Segmenten erreicht wird.

Bei einer Autobahnfahrt dagegen treten in der Regel geringe Querabstände zwischen nebeneinander auf verschiedenen Fahrstreifen fahrenden Fahrzeugen auf, während in Längsrichtung zumindest bei den als Kriterium für eine Autobahnfahrt geltenden Geschwindigkeiten die auftretenden Abstände zwischen hintereinander herfahrenden Fahrzeugen sehr groß sein können. Um also eine bessere Trennung in Querrichtung zu erreichen und eine zu starke Trennung in Längsrichtung zu vermeiden, wird der Gewichtungsparameter g in diesem Fall auf beispielsweise den Wert 0,8 gesetzt, so dass in der oben angegebenen Formel für den Abstand zwischen zwei Rohdatenelementen i und j, $d_{ij}$ (g), die Abstände in y-Richtung, d.h. senkrecht zur Fahrzeuglängsachse und Fahrtrichtung, wesentlich stärker gewichtet werden. Die geringe Gewichtung der Abstände in x-Richtung hat darüber hinaus den Vorteil, dass Rohdatenelemente, die auf einer Längsseite eines Fahrzeugs erfasst werden und bedingt durch die Perspektive des Laserscanners 10 weit voneinander entfernt sind, noch zu einem Segment zusammengefasst werden können.

Weiterhin wird in diesem Fall der Trennparameter D auf einen größeren Wert gesetzt, um eine zu hohe Auflösung in verschiedene Segmente, wie sie beispielsweise bei Erfassung eines Lastkraftwagens in Höhe der Achse auftreten kann, zu vermeiden. So können beispielsweise Radkästen und Achsen eines Lastkraftwagens ohne weiteres einem Segment zugeordnet werden. Im Ausführungsbeispiel wird dazu der Trennparameter D auf den Wert von 1 m gesetzt.

Insgesamt wird hierdurch ein möglicher Objektzerfall durch eine Auflösung in zu viele Segmente verhindert.

Bei einem Verfahren nach einer dritten bevorzugten Ausführungsform der Erfindung werden gegenüber dem Verfahren nach der ersten Ausführungsform der Erfindung bei der Segmentierung zusätzlich Reflektivitäten von Gegenstandspunkten berücksichtigt. Das Verfahren hierzu entspricht dem für das erste Ausführungsbeispiel geschilderten Verfahren, wobei jedoch Rohdatenelemente verwendet werden, die einen Reflektivitätswert für jeden Gegenstandspunkt enthalten.

Bei der Korrektur von Geistermessungen entsprechend Schritt S12 werden den Rohdatenelementen, die das einem virtuellen Gegenstandspunkt entsprechende Rohdatenelement ersetzen, jeweils die Reflektivitäten der Rohdatenelemente zugeordnet, deren Koordinaten auch zur Bestimmung der Koordinaten der Ersatzrohdatenelemente dienen.

Bei der Segmentbildung entsprechend Schritt S18 werden als weitere Beziehungen zwischen Rohdatenelementen die Beträge der Differenzen zwischen den Reflektivitäten $R_i$ und $R_j$ von Rohdatenelementen i und j berechnet und mit einem Schwellwert $R_s$ verglichen. Die Segmentierungsparameter umfassen daher den Trennparameter D, den Gewichtungsparameter g und den Schwellwert $R_s$.

Zwei Punkte werden nur dann einem Segment zugeordnet, wenn sowohl das Kriterium für die Abstände, das heißt $d_{ij}(g) < D$, und gleichzeitig das Kriterium für die Reflektivitäten, das heißt $|R_i - R_j| < R_s$, erfüllt sind. Dies hat insbesondere zur Folge, dass beispielsweise sehr nahe an einer Wand stehende Personen, bei der Segmentierung von der Wand getrennt werden können, da die ihnen zugeordneten Rohdatenelemente eine andere Reflektivität aufweisen als die Rohdatenelemente der dahinter liegenden Wand, während sonst aufgrund der geringen geometrischen Abstände die Rohdatenelemente von Wand und Person zu einem Segment zusammengefasst würden.

Bei der Berechnung der Segmenteigenschaften in Schritt S20' wird zusätzlich zu den bisher schon genannten Eigenschaften für jedes Segment eine mittlere Reflektivität berechnet, die sich als Mittelwert über die Reflektivitäten der Rohdatenelemente ergibt, die das Segment bilden.

Weiterhin sind von dem Laserscanner 10 erfasste Neigungsdaten in den Rohdatenelementen enthalten. Bei den Neigungsdaten handelt es sich, wie einleitend ausgeführt, um die Neigung der Gegenstandsoberfläche im Bereich des einem Rohdatenelement entsprechenden Gegenstands, relativ zur Richtung des abtastenden Strahlungsbündels. Bei der Berechnung der Segmenteigenschaften im Schritt S20' kann dann sowohl eine mittlere Neigung des Segments, berechnet als Mittelwert der Neigungsdaten, als auch eine Schwankung der Neigungsdaten, berechnet als Standardabweichung von dem berechneten Mittelwert, ausgegeben werden. Dies erleichtert es bei bestimmten Segmenten, bestimmte Typen von Objekten, beispielsweise Fahrbahnrampen, zu erkennen.

Bei einem Verfahren nach einer vierten bevorzugten Ausführungsform der Erfindung werden im Vergleich zu dem Verfahren nach der ersten Ausführungsform der Erfindung andere Beziehungen zwischen den Rohdatenelementen und andere Segmentierungsparameter verwendet. Anstelle des mit dem Gewichtungsfaktor g gewichteten Abstands $d_{ij}$ (g), des Trennparameters D und des Gewichtungsparameters g werden die Abstände der Koordinaten in x- und y-Richtung verwendet. Dazu werden für die Abstände in den beiden Richtungen als Segmentierungsparameter jeweils unterschiedliche Trennparameter $D_x$ und $D_y$ verwendet, so dass die Abstandskriterien zum Beispiel lauten können:

$$|x_i - x_j| < D_x$$

$$|y_i - y_j| < D_y,$$

wobei i und j jeweils unterschiedliche Rohdatenelemente bezeichnen. Eine Segmentzugehörigkeit wird nur dann erkannt, wenn beide Abstandskriterien erfüllt sind.

Eine unterschiedliche Gewichtung in den beiden Koordinatenrichtungen lässt sich dadurch erreichen, dass das Verhältnis von $D_x$ zu $D_y$ nicht auf den Wert 1 gesetzt wird, sondern beispielsweise im Fall einer Autobahnfahrt $D_y$ deutlich kleiner gewählt wird als $D_x$.

Bezugzeichenliste

| | |
|---|---|
| 10 | Laserscanner |
| 12 | Kraftfahrzeug |
| 14 | Sichtbereich |
| 16 | Kraftfahrzeug |
| 18 | Kraftfahrzeug |
| 20 | Auswerteelektronik |
| 22 | Gegenstand |
| 24 | Gegenstand |
| 26 | Gegenstandspunkte auf Gegenstand 22 |
| 28, 28' | Gegenstandspunkte auf Gegenstand 24 |
| 30 | LaserStrahlungsbündel |
| 32 | virtueller Gegenstandspunkt |

**Patentansprüche**

1. Verfahren zur Verarbeitung eines tiefenaufgelösten Bildes eines Überwachungsbereichs, das von einem Sensor für elektromagnetische Strahlung, insbesondere einem Laserscanner (10), bei einer Abtastung seines Sichtbereichs (14) erfasst wurde und Rohdatenelemente umfasst, die Punkten (19, 26, 28, 28') auf Gegenständen (16, 18, 22, 24) in dem Überwachungsbereich entsprechen und die Koordinaten der Positionen der Gegenstandspunkte (19, 26, 28, 28') enthalten, wobei Beziehungen zwischen den Rohdatenelementen ermittelt und die Rohdatenelemente auf der Basis der Beziehungen nach wenigstens einem vorgegebenen Kriterium zu einem oder mehreren Segmenten zusammengefasst werden, wobei die Beziehungen und/oder das Kriterium von wenigstens einem Segmentierungsparameter abhängen,
**dadurch gekennzeichnet,**
**dass** die Rohdatenelemente die Position eines Gegenstandspunkts (19, 26, 28, 28') und dessen Reflektivität umfassen, und
**dass** zur Segmentierung die Beziehungen zwischen Rohdatenelementen Unterschiede in den Reflektivitäten von je zwei Gegenstandspunkten umfassen.

2. Verfahren nach Anspruch 1,
**dadurch gekennzeichnet,**
**dass** als weiterer Segmentierungsparameter eine maximale Reflektivitätsdifferenz verwendet wird, und
**dass** eines der Rohdatenelemente einem Segment nur zugeordnet wird, wenn es wenigstens einem Kriterium für mindestens einen Element-Element-Abstand zu mindestens einem weiteren, dem Segment zuzuordnenden Rohdatenelement genügt und wenn sich die Reflektivitäten des Rohdatenelements und des weiteren Rohdatenelements um weniger als die maximale Reflektivitätsdifferenz unterscheiden.

3. Verfahren nach Anspruch 1 oder 2,
**dadurch gekennzeichnet,**

**dass** die Rohdatenelemente einen Neigungswinkel enthalten, der einem Winkel zwischen der Achse des von dem Sensor erfassten Strahlungsbündels und der Normalen auf eine Fläche eines Gegenstands entspricht, die das Strahlungsbündel reflektiert hat, und

**dass** einem Segment als Segmenteigenschaft ein Neigungswinkel zugeordnet wird, der in Abhängigkeit von den Neigungswinkeln der das Segment bildenden Rohdatenelemente ermittelt wird.

4. Verfahren nach einem der vorhergehenden Ansprüche,
   **dadurch gekennzeichnet,**
   **dass** die Beziehungen zwischen Rohdatenelementen räumliche Element-Element-Abstände der Positionen je zweier Rohdatenelemente umfassen,
   **dass** eine Segmentzugehörigkeit eines Rohdatenelements nur festgestellt wird, wenn zumindest der Element-Element-Abstand der Position des Rohdatenelements von der Position wenigstens eines anderen, dem Segment zuzuordnenden Rohdatenelements den Wert eines entsprechenden Segmentierungsparameters unterschreitet.

5. Verfahren nach Anspruch 4,
   **dadurch gekennzeichnet,**
   **dass** zur Ermittlung des Element-Element-Abstands zweier Rohdatenelemente eine Abstandsfunktion der Differenzen von Koordinaten der Rohdatenelemente und als ein weiterer Segmentierungsparameter ein Gewichtungsparameter verwendet werden, wobei die Differenzen über den Gewichtungsparameter relativ zueinander gewichtet werden.

6. Verfahren nach einem der Ansprüche 1 bis 3,
   **dadurch gekennzeichnet,**
   **dass** die Beziehungen zwischen Rohdatenelementen zwei Element-Element-Abstände der Positionen je zweier Rohdatenelemente umfassen, die sich jeweils auf eine der Koordinaten der Rohdatenelemente beziehen und denen jeweils ein weiterer Segmentierungsparameter zugeordnet ist, und
   **dass** eine Segmentzugehörigkeit eines Rohdatenelements nur festgestellt wird, wenn beide Element-Element-Abstände zwischen den Positionen des Rohdatenelements und der Position wenigstens eines anderen, dem Segment zuzuordnenden Rohdatenelements die Werte der entsprechenden Segmentierungsparameter unterschreiten.

7. Verfahren nach einem der vorhergehenden Ansprüche,
   **dadurch gekennzeichnet,**
   **dass** wenigstens ein Segmentierungsparameter von dem Abstand der Position wenigstens eines der beiden bei der Ermittlung der Beziehung zwischen zwei Rohdatenelementen verwendeten Rohdatenelemente zu dem Sensor (10) und/oder der Richtung der Position relativ zu einer vorgegebenen Achse durch den Sensor abhängt.

8. Verfahren nach einem der Ansprüche 4 bis 7,
   **dadurch gekennzeichnet,**
   **dass** dem Sensor (10) eine Achse zugeordnet ist, und
   **dass** durch Wahl wenigstens eines entsprechenden Segmentierungsparameters Positionsdifferenzen in Richtung der Achse weniger stark berücksichtigt werden als in einer Richtung senkrecht zu der Achse.

9. Verfahren nach einem der vorhergehenden Ansprüche,
   **dadurch gekennzeichnet,**
   **dass** wenigstens einer der Segmentierungsparameter situationsadaptiv angepasst wird.

10. Verfahren nach Anspruch 9,
    **dadurch gekennzeichnet,**
    **dass** eine tatsächliche oder eine daran angenäherte Bewegung des Sensors (10) ermittelt wird, und
    **dass** wenigstens einer der Segmentierungsparameter unter Verwendung der Geschwindigkeit des Sensors (10) adaptiert wird.

11. Verfahren nach einem der vorhergehenden Ansprüche,
    **dadurch gekennzeichnet,**
    **dass** ein Bild verwendet wird, das **dadurch** erhalten wurde, dass bei einer Abtastung des Sichtbereichs (14) des Sensors (10) die Rohdatenelemente nacheinander erfasst wurden,
    und **dass** vor der Segmentbildung die Position der Rohdatenelemente jeweils entsprechend der tatsächlichen oder einer daran angenäherten Bewegung des Sensors und der Differenz zwischen den Erfassungszeitpunkten der jeweiligen Rohdatenelemente und einem Bezugszeitpunkt korrigiert werden.

12. Verfahren nach einem der vorhergehenden Ansprüche,
**dadurch gekennzeichnet,**
**dass** Bilder verwendet werden, die **dadurch** erhalten wurden, dass bei einer Abtastung des Sichtbereichs (14) des Sensors (10) die Rohdatenelemente nacheinander erfasst wurden,
**dass** eine Folge von Bildern erfasst und eine Objekterkennung und/oder -verfolgung auf der Basis der Rohdatenelemente der Bilder durchgeführt wird, wobei jedem erkannten Objekt Rohdatenelemente und jedem dieser Rohdatenelemente bei der Objektverfolgung berechnete Bewegungsdaten zugeordnet werden, und
**dass** vor der Segmentbildung die Positionen der Rohdatenelemente unter Verwendung der Ergebnisse der Objekterkennung und/oder -verfolgung korrigiert werden.

13. Verfahren nach Anspruch 12,
**dadurch gekennzeichnet,**
**dass** bei der Korrektur die Koordinaten der Rohdatenelemente entsprechend der ihnen zugeordneten Bewegungsdaten und der Differenz zwischen der Erfassungszeit der Rohdatenelemente und einem Bezugszeitpunkt korrigiert werden.

14. Verfahren nach einem der Ansprüche 10 bis 13,
**dadurch gekennzeichnet,**
**dass** der Bezugszeitpunkt zwischen der frühesten als Erfassungszeit definierten Zeit eines Rohdatenelements einer Abtastung und der zeitlich letzten als Erfassungszeit definierten Zeit eines Rohdatenelements der Abtastung liegt.

15. Verfahren nach einem der vorhergehenden Ansprüche,
**dadurch gekennzeichnet,**
**dass** zur Erkennung eines einem virtuellen Gegenstandspunkt (32) entsprechenden Rohdatenelements in einem vorgegebenen Winkelbereich des Sichtbereichs, das durch eine gleichzeitige Erfassung von zwei in dem Bild hintereinanderliegenden Gegenständen erhalten wurde, auf die Rohdatenelemente, die in dem Winkelbereich liegen, ein Gradientenfilter angewendet wird, der jeweils den Rohdatenelementen zugeordnete Elementgradienten verwendet, die Gradienten des radialen Abstands der Position des Rohdatenelements von dem Sensor in Bezug auf den Winkel der Position zu einer vorgegebenen Achse durch den Sensor entsprechen.

16. Verfahren nach Anspruch 15,
**dadurch gekennzeichnet,**
**dass** die Elementgradienten durch Bildung der Differenz zweier Abstandswerte ermittelt werden, die in Bezug auf die Winkel aufeinanderfolgen, und
**dass** ein einem virtuellen Gegenstandspunkt (32) entsprechendes Rohdatenelement nur ermittelt wird, wenn der Betrag eines Elementgradienten, der unter Verwendung des Rohdatenelements ermittelt wurde, einen ersten Schwellwert überschreitet und die Änderung der Elementgradienten der Abstandswerte von zu dem Rohdatenelement benachbarten, aufeinanderfolgenden Rohdatenelementen oberhalb eines zweiten Schwellwerts liegt oder für dieses Rohdatenelement der Betrag der Änderung des Elementgradienten einen Schwellwert übersteigt.

17. Verfahren nach Anspruch 15 oder 16,
**dadurch gekennzeichnet,**
**dass** ein Rohdatenelement, das einem virtuellen Gegenstandspunkt (32) entspricht, aus der Menge der Rohdatenelemente entfernt wird.

18. Verfahren nach Anspruch 15 oder 16,
**dadurch gekennzeichnet,**
**dass** ein Rohdatenelement, das einem virtuellen Gegenstandspunkt (32) entspricht, durch wenigstens ein Rohdatenelement ersetzt wird, das den gleichen Winkel aufweist, wobei dem Rohdatenelement als Abstand ein aus wenigstens einem in Bezug auf den Winkel benachbarten Rohdatenelement mit kleinerem oder größerem Winkel bestimmter Abstand zugeordnet wird.

19. Verfahren nach Anspruch 18,
**dadurch gekennzeichnet,**
**dass** der zuzuordnende Abstand durch Extrapolation der Abstände der benachbarten Rohdatenelemente bestimmt wird.

**20.** Verfahren nach einem der Ansprüche 15 bis 19,
**dadurch gekennzeichnet,**
**dass** die Rohdatenelemente Reflektivitätswerte enthalten und zur Ermittlung eines virtuellen Gegenstandspunkts Gradienten der Reflektivitäten verwendet werden.

**21.** Verfahren nach einem der vorhergehenden Ansprüche,
**dadurch gekennzeichnet,**
**dass** für mindestens ein Segment mehrere, bevorzugt mindestens vier, Eigenschaften ermittelt und diesem zugeordnet werden, wobei die Eigenschaften ausgewählt werden aus der Gruppe Koordinaten eines Bezugspunkts, insbesondere des Schwerpunkts, des Segments, Breite des Segments, Länge des Segments, Reflektivität des Segments, Neigungswinkel des Segments, Anzahl der Rohdatenelemente des Segments und Alter des Segments.

**22.** Verfahren nach einem der vorhergehenden Ansprüche,
**dadurch gekennzeichnet,**
**dass** die Rohdatenelemente eine Höheninformation enthalten, und
**dass** die Höheninformation zur Segmentierung verwendet wird.

**23.** Verfahren nach einem der vorhergehenden Ansprüche,
**dadurch gekennzeichnet,**
**dass** die Rohdatenelemente eine Höheninformation enthalten, und dass für ein Segment als Eigenschaft in Abhängigkeit von den Höhen der dieses Segment bildenden Rohdatenelemente eine Segmenthöhe ermittelt und diesem zugeordnet wird.

**24.** Computerprogramm mit Programmcode-Mitteln, um die Verfahren nach einem der Ansprüche 1 bis 23 durchzuführen, wenn das Programm auf einem Computer ausgeführt wird.

**25.** Computerprogrammprodukt mit Programmcode-Mitteln, die auf einem computerlesbaren Datenträger gespeichert sind, um das Verfahren nach einem der Ansprüche 1 bis 23 durchzuführen, wenn das Computerprogrammprodukt auf einem Computer ausgeführt wird.

**26.** Vorrichtung zur Erzeugung eines Modells eines Überwachungsbereichs mit mindestens einem Sensor für elektromagnetische Strahlung, insbesondere einem Laserscanner (10), dessen Sichtbereich (14) den Überwachungsbereich einschließt, und mit einer Datenverarbeitungseinrichtung, die

- zur Durchführung eines Verfahrens zur Verarbeitung eines bevorzugt tiefenaufgelösten Bildes des Überwachungsbereichs ausgebildet ist, das bei einer Abtastung des Sichtbereichs (14) des Sensors erfasst wurde und Rohdatenelemente umfasst, die Punkten (19, 26, 28, 28') auf Gegenständen (16, 18, 22, 24) in dem Überwachungsbereich entsprechen und die Koordinaten der Positionen der Gegenstandspunkte (19, 26, 28, 28') und deren Reflektivität umfassen, und
- Mittel zum Ermitteln von Beziehungen zwischen den Rohdatenelementen, die zur Segmentierung Unterschiede in den Reflektivitäten von je zwei Gegenstandspunkten umfassen, und Mittel zum Zusammenfassen der Rohdatenelemente auf der Basis der Beziehungen nach wenigstens einem vorgegebenen Kriterium zu einem oder mehreren Segmenten umfasst, wobei die Beziehungen und/oder das Kriterium von wenigstens einem Segmentierungsparameter abhängen.

**Claims**

**1.** A method for the processing of a depth resolved image of a monitored zone which was detected by a sensor for electromagnetic radiation, in particular a laser scanner (10), on a scan of its field of view (14) and which includes raw data elements corresponding to points (19, 26, 28, 28') on objects (16, 18, 22, 24) in the monitored zone and including coordinates of the positions of the object points (19, 26, 28, 28'), wherein relationships between the raw data elements are determined and the raw data elements are combined to form one or more segments on the basis of the relationships in accordance with at least one preset criterion, wherein the relationships and/or the criterion depend on at least one segmentation parameter,
**characterised in that**
the raw data elements include the position of an object point (19, 26, 28, 28') and its reflectivity; and
**in that**, for the segmentation, the relationships between raw data elements include differences in the reflectivity of two respective object points,

**2.** A method in accordance with claim 1,
**characterised in that**
a maximum reflectivity difference is used as a further segmentation parameter; and
**in that** one of the raw data elements is only associated with a segment when it satisfies at least one criterion for at least one element-to-element spacing from at least one further raw data element to be associated with the segment and when the reflectivities of the raw data element and of the further raw data element differ by less than the maximum reflectivity difference.

**3.** A method in accordance with claim 1 or claim 2,
**characterised in that**
the raw data elements include an inclination angle which corresponds to an angle between the axis of the radiation beam detected by the sensor and the normal on a surface of an object which has reflected the radiation beam; and
**in that** an inclination angle is associated with a segment as a segment property, said inclination angle being determined in dependence on the inclination angles of the raw data elements forming the segment.

**4.** A method in accordance with any one of the preceding claims,
**characterised in that**
the relationships between raw data elements include spatial element-to-element spacings of the positions of two respective raw data elements;
**in that** a segment association of a raw data element is only determined when at least the element-to-element spacing of the position of the raw data element from the position of at least one further raw data element to be associated with the segment falls below the value of a corresponding segmentation parameter.

**5.** A method in accordance with claim 4,
**characterised in that**
a spacing function of the differences of coordinates of the raw data elements is used for the determination of the element-to-element spacing of two raw data elements and a weighting parameter is used as a further segmentation parameter, with the differences being weighted relative to one another over the weighting parameters.

**6.** A method in accordance with any one of the claims 1 to 3,
**characterised in that**
the relationships between raw data elements include two element-to-element spacings of the positions of two respective raw data elements which each relate to one of the coordinates of the raw data elements and with which a respective further segmentation parameter is associated; and
**in that** a segmentation association of a raw data element is only determined when both element-to-element spacings between the positions of the raw data element and the position of at least one other raw data element to be associated with the segment fall below the values of the corresponding segmentation parameters.

**7.** A method in accordance with any one of the preceding claims,
**characterised in that**
at least one segmentation parameter depends on the spacing of the position of at least one of the two raw data elements used for the determination of the relationship between two raw data elements from the sensor (10) and/or on the direction of the position relative to a preset axis through the sensor.

**8.** A method in accordance with any one of the claims 4 to 7,
**characterised in that**
an axis is associated with the sensor (10); and
**in that** positional differences in the direction of the axis are taken less into account than in a direction perpendicular to the axis by selection of at least one corresponding segmentation parameter.

**9.** A method in accordance with any one of the preceding claims,
**characterised in that**
at least one of the segmentation parameters is adapted situation-adaptively.

**10.** A method in accordance with claim 9,
**characterised in that**

an actual movement of the sensor (10) or a movement approximated thereto is determined; and
**in that** at least one of the segmentation parameters is adapted using the speed of the sensor (10).

11. A method in accordance with any one of the preceding claims,
**characterised in that**
a image is used which was obtained **in that** the raw data elements were detected sequentially on a scan of the field of view (14) of the sensor (10);
and **in that** the position of the raw data elements is corrected in each case in accordance with the actual movement of the sensor or with a movement approximated thereto and in accordance with the difference between the detection times of the respective raw data elements and a reference time before the segmentation formation.

12. A method in accordance with any one of the preceding claims,
**characterised in that**
images are used which were obtained **in that** the raw data elements were detected sequentially on a scan of the field of view (14) of the sensor (10);
**in that** a sequence of images is detected and an object detection and/or object tracking is/are carried out on the basis of the raw data elements of the images, with raw data elements being associated with each recognised object and movement data calculated in the object tracking being associated with each of these raw data elements; and
**in that** the positions of the raw data elements are corrected before the segmentation formation using the results of the object recognition and/or object tracking.

13. A method in accordance with claim 12,
**characterised in that**
the coordinates of the raw data elements are corrected in accordance with the movement data associated with them and in accordance the difference between the detection time of the raw data elements and a reference time on the correction.

14. A method in accordance with any one of the claims 10 to 13,
**characterised in that**
the reference time lies between the earliest time of a raw data element of a scan defined as the detection time and the time of a raw data element of the scan last defined in time as the detection time.

15. A method in accordance with any one of the preceding claims,
**characterised in that**,
for the recognition of a raw data element corresponding to a virtual object point (32) in a preset angular range of the field of view, which was obtained by a simultaneous detection of two objects disposed sequentially in the image, a gradient filter is applied to the raw data elements disposed in the angular range and in each case uses the element gradients which are associated with the raw data element and which correspond to gradients of the radial spacing of the position of the raw data element from the sensor with respect to the angle of the position to a preset axis through the sensor.

16. A method in accordance with claim 15,
**characterised in that**
the element gradients are determined by forming the difference of two spacing values which are sequential with respect to the angles; and
**in that** a raw data element corresponding to a virtual object point (32) is only determined when the magnitude of an element gradient determined using the raw data element exceeds a first threshold value and the change of the element gradients of the spacing values from sequential raw data elements adjacent to the raw data element is above a second threshold value or the magnitude of the change of the element gradient exceeds a threshold value for this raw data element.

17. A method in accordance with claim 15 or claim 16,
**characterised in that**
a raw data element corresponding to a virtual object point (32 is removed) from which the set of the raw data elements.

18. A method in accordance with claim 15 or claim 16,
**characterised in that**
a raw data element corresponding to a virtual object point (32) is replaced by at least one raw data element which has the same angle, with a spacing determined from at least one raw data element which is adjacent with respect to the angle and has a smaller or larger angle being associated with the rotational element as the spacing.

19. A method in accordance with claim 18,
**characterised in that**
the spacing to be associated is determined by extrapolation of the spacings of the adjacent raw data elements.

20. A method in accordance with any one of the claims 15 to 19,
**characterised in that**
the raw data elements include reflectivity values; and
gradients of the reflectivities are used for the determination of a virtual object point.

21. A method in accordance with any one of the preceding claims,
**characterised in that**
a plurality of properties, preferably at least four properties, are determined for at least one segment and are associated therewith, with the properties being selected from the group of coordinates of a reference point, in particular of the focus, of the segment, of the width of the segment, length of the segment, reflectivity of the segment, inclination angle of the segment, number of the raw data elements of the segment and age of the segment.

22. A method in accordance with any one of the preceding claims,
**characterised in that**
the raw data elements include height information; and **in that** the height information is used for the segmentation.

23. A method in accordance with any one of the preceding claims,
**characterised in that**
the raw data elements include height information; and
**in that** a segment height is determined for a segment as a property in dependence on the heights of the raw data element forming this segment and is associated with it.

24. A computer program with program code means to carry out the method in accordance with any one of the claims 1 to 23, when the program is carried out on a computer.

25. A computer program product with program code means which are stored on a computer readable data carrier to carry out the method in accordance with any one of the claims 1 to 24, when the computer program product is carried out on a computer.

26. A device for the generation of a model of a monitored zone having at least one sensor for electromagnetic radiation, in particular a laser scanner (10), whose field of view (14) includes the monitored zone; and having a data processing device which

- is made for the carrying out of a method for the processing of an image, preferably a depth-resolved image, of the monitored zone which was detected on a scan of the field of view (14) of the sensor and includes raw data elements which correspond to points (19, 26, 28, 28') on objects (16, 18, 22, 24) in the monitored zone and include the coordinates of the positions of the object points (19, 26, 28, 28') and their reflectivity; and
- includes means for the determination of relationships between the raw data elements, which include differences in the reflectivities of two respective object points for the segmentation, and means for the combination of the raw data elements on the basis of the relationships in accordance with at least one preset criterion to one or more segments, with the relationships and/or the criterion depending on at least one segmentation parameter.

**Revendications**

1. Procédé pour traiter une image à résolution en profondeur d'une zone de surveillance, qui a été prise par un détecteur de rayonnement électromagnétique, en particulier par un scanneur laser (10), lors d'un balayage d'une zone de vision (14) et qui inclut des éléments de données brutes, qui correspondent à des points (19, 26, 28, 28') sur des objets (16, 18, 22, 24) dans la zone de surveillance et qui incluent des coordonnées des positions des points d'objet (19, 26, 28, 28'), dans lequel on détermine des relations entre les éléments de données brutes et on réunit en un ou en plusieurs segments les éléments de données brutes suivant au moins un critère donné en se basant sur lesdites relations, les relations et/ou le critère dépendant d'au moins un paramètre de segmentation,
**caractérisé en ce que**
les éléments de données brutes incluent la position d'un point d'objet (19, 26, 28, 28') et sa réflectivité, et **en ce que** pour la segmentation, les relations entre les éléments de données brutes présentent des différences quant aux réflectivités de deux points d'objet respectifs.

2. Procédé selon la revendication 1,
**caractérisé en ce que**
l'on utilise à titre d'autre paramètre de segmentation une différence maximale de réflectivité, et
**en ce que** l'un des éléments de données brutes n'est associé à un segment que lorsqu'il satisfait à au moins un critère pour au moins une distance élément-élément par rapport à au moins un autre élément de données brutes à associer au segment, et lorsque les réflectivités de l'élément de données brutes et de l'autre élément de données brutes diffèrent de moins de la différence maximale de réflectivité.

3. Procédé selon la revendication 1 ou 2,
**caractérisé en ce que**
les éléments de données brutes incluent un angle d'inclinaison qui correspond à un angle entre l'axe du faisceau de rayons détecté par le détecteur et la normale à une surface d'un objet qui a réfléchi le faisceau de rayons, et **en ce que** l'on associe à un segment, à titre de caractéristique de segment, un angle d'inclinaison qui est déterminé en fonction des angles d'inclinaison des éléments de données brutes constituant le segment.

4. Procédé selon l'une des revendications précédentes,
**caractérisé en ce que**
les relations entre les éléments de données brutes incluent des distances tridimensionnelles élément-élément des positions de deux éléments respectifs de données brutes,
**en ce que** l'on ne constate une appartenance d'un élément de données brutes à un segment que lorsque la distance élément-élément au moins entre la position de l'élément de données brutes et la position d'au moins un autre élément de données brutes à associer au segment passe au-dessous de la valeur d'un paramètre de segmentation correspondant.

5. Procédé selon la revendication 4,
**caractérisé en ce que**
pour déterminer la distance élément-élément de deux éléments de données brutes, on applique une fonction de distance des différences de coordonnées des éléments de données brutes et, à titre d'autre paramètre de segmentation, on utilise un paramètre de pondération, les différences étant pondérées les unes par rapport aux autres via le paramètre de pondération.

6. Procédé selon l'une des revendications 1 à 3,
**caractérisé en ce que**
les relations entre les éléments de données brutes incluent deux distances élément-élément des positions de deux éléments respectifs de données brutes, qui se réfèrent respectivement à l'une des coordonnées des éléments de données brutes et auxquelles est associé respectivement un autre paramètre de segmentation, et
**en ce que** l'on ne constante une appartenance d'un élément de données brutes à un segment que lorsque les deux distances élément-élément entre les positions de l'élément de données brutes et la position d'au moins un autre élément de données brutes à associer au segment passe au-dessous des valeurs du paramètre de segmentation correspondant.

7. Procédé selon l'une des revendications précédentes,
**caractérisé en ce que**
au moins un paramètre de segmentation dépend de la distance de la position de l'un au moins des deux éléments de données brutes utilisés lors de la détermination de la relation entre deux éléments de données brutes par rapport au détecteur (10) et/ou de la direction de la position par rapport à un axe donné passant par le détecteur.

8. Procédé selon l'une des revendications 4 à 7,
**caractérisé en ce que**
un axe est associé au détecteur (10), et **en ce que** par le choix d'au moins un paramètre de segmentation correspondant, on tient compte des différences de position dans la direction de l'axe moins fortement que dans une direction perpendiculaire à l'axe.

**9.** Procédé selon l'une des revendications précédentes,
**caractérisé en ce que**
l'un au moins des paramètres de segmentation est adapté en fonction de la situation.

**10.** Procédé selon la revendication 9,
**caractérisé en ce que**
l'on détermine un mouvement réel ou un mouvement approximativement réel du détecteur (10), et
**en ce que** l'un au moins des paramètres de segmentation est adapté en utilisant la vitesse du détecteur (10).

**11.** Procédé selon l'une des revendications précédentes,
**caractérisé en ce que**
l'on utilise une image qui a été obtenue par saisie consécutive des éléments de données brutes lors d'un balayage de la zone de vision (14) du détecteur (10),
et **en ce qu'**avant la formation de segment, on corrige la position des éléments de données brutes respectivement en fonction du mouvement réel ou d'un mouvement approximativement réel du détecteur et de la différence entre les instants de détection des éléments respectifs de données brutes et un instant de référence.

**12.** Procédé selon l'une des revendications précédentes,
**caractérisé en ce que**
l'on utilise des images qui ont été obtenues par saisie consécutive des éléments de données brutes lors d'un balayage de la zone de vision (14) du détecteur (10),
**en ce que** l'on saisit une succession d'images et on procède à une reconnaissance d'objet et/ou à une poursuite d'objet en se basant sur les éléments de données brutes des images, en associant à chaque objet reconnu des éléments de données brutes et en associant à chacun de ces éléments dé données brutes, lors de la poursuite d'objet, des données de mouvement calculés,
et ce qu'avant la formation de segment, on corrige les positions des éléments de données brutes en utilisant les résultats de la reconnaissance d'objet et/ou de la poursuite d'objet.

**13.** Procédé selon la revendication 12,
**caractérisé en ce que**
lors de la correction, on corrige les coordonnées des éléments de données brutes en correspondance des données de mouvement qui leur sont associées et en correspondance de la différence entre l'instant de saisie des éléments de données brutes et un instant de référence.

**14.** Procédé selon l'une des revendications 10 à 13,
**caractérisé en ce que**
l'instant de référence se situe entre l'instant le plus précoce défini comme étant l'instant de détection d'un élément de données brutes d'un balayage, et le dernier instant temporel défini comme étant l'instant de détection d'un élément de données brutes du balayage.

**15.** Procédé selon l'une des revendications précédentes,
**caractérisé en ce que**
pour la reconnaissance d'un élément de données brutes correspondant à un point d'objet virtuel (32), dans une plage angulaire donnée de la zone de vision, élément qui a été obtenu par une détection simultanée de deux objets situés l'un derrière l'autre dans l'image, on applique un filtre à gradients aux éléments de données brutes situés dans la plage angulaire, filtre qui utilise respectivement des gradients d'élément associés aux éléments de données brutes, qui correspondent à des gradients de la distance radiale entre la position des éléments de données brutes et le détecteur par rapport à l'angle de la position vis-à-vis d'un axe donné passant par le détecteur.

**16.** Procédé selon la revendication 15,
**caractérisé en ce que**
l'on détermine les gradients d'élément par formation de la différence de deux valeurs de distance qui se succèdent par référence aux angles, et
**en ce que** l'on ne détermine un élément de données brutes correspondant à un point d'objet virtuel (32) que lorsque la valeur d'un gradient d'élément qui a été déterminé en utilisant l'élément de données brutes, passe au-dessus d'une première valeur seuil et que la modification des gradients d'élément des valeurs de distance d'éléments de données brutes successives voisines de l'élément de données brutes est supérieure à une seconde valeur seuil ou que pour cet élément de données brutes, la valeur de la modification du gradient d'élément passe au-dessus d'une valeur seuil.

**17.** Procédé selon la revendication 15 ou 16,
**caractérisé en ce que**
l'on élimine de l'ensemble d'éléments de donnés brutes un élément de données brutes qui correspond à un point d'objet virtuel (32).

**18.** Procédé selon la revendication 15 ou 16,
**caractérisé en ce que**
l'on substitue à un élément de données brutes qui correspond à un point d'objet virtuel (32) au moins un élément de données brutes qui présente le même angle, en associant à l'élément de données brutes, à titre de distance, une distance déterminée à partir d'au moins un élément de données brutes, voisin quant à l'angle, présentant un angle plus petit ou plus grand.

**19.** Procédé selon la revendication 18,
**caractérisé en ce que**
l'on détermine la distance à associer par extrapolation des distances des éléments de données brutes voisins.

**20.** Procédé selon l'une des revendications 15 à 19,
**caractérisé en ce que**
les éléments de données brutes incluent des valeurs de réflectivité, et pour déterminer un point d'objet virtuel, on utilise des gradients des réflectivités.

**21.** Procédé selon l'une des revendications précédentes,
**caractérisé en ce que**
pour au moins un segment, on détermine plusieurs, de préférence au moins quatre propriétés, et on les associe à celui-ci, les propriétés étant choisies parmi le groupe contenant les coordonnées d'un point de référence, en particulier du centre de gravité, du segment, la largeur du segment, la longueur du segment, la réflectivité du segment, l'angle d'inclinaison du segment, le nombre d'éléments de données brutes du segment et l'âge du segment.

**22.** Procédé selon l'une des revendications précédentes,
**caractérisé en ce que**
les éléments de données brutes incluent une information relative à la hauteur, et **en ce que** l'on utilise l'information relative à la hauteur pour la segmentation.

**23.** Procédé selon l'une des revendications précédentes,
**caractérisé en ce que**
les éléments de données brutes incluent une information relative à la hauteur, et **en ce que** l'on détermine une hauteur de segment pour un segment à titre de propriété en fonction des hauteurs des éléments de données brutes constituant ce segment, et on l'associe à celui-ci.

**24.** Programme d'ordinateur comprenant des moyens formant code de programme pour mettre en oeuvre le procédé selon l'une des revendications 1 à 23, lorsque le programme est exécuté sur un ordinateur.

**25.** Produit de programme d'ordinateur comprenant des moyens formant code de programme qui sont mémorisés sur un support de données lisible à l'ordinateur pour mettre en oeuvre le procédé selon l'une des revendications 1 à 23, lorsque le produit de programme est exécuté sur un ordinateur.

**26.** Dispositif pour générer un modèle d'une zone de surveillance comportant au moins un détecteur de rayonnement électromagnétique, en particulier un scanner laser (10), dont la zone de vision (14) inclut la zone de surveillance, et comportant un système de traitement de données qui

- est réalisé pour mettre en oeuvre un procédé pour le traitement d'une image de préférence à résolution en profondeur de la zone de surveillance, qui a été prise lors d'un balayage de la zone de vision (14) du détecteur et qui inclut des éléments de données brutes qui correspondent à des points (19, 26, 28, 28') sur des objets (16, 18, 22, 24) dans la zone de surveillance et qui incluent des coordonnées des positions des points d'objet (19, 26, 28, 28') et leurs réflectivité, et
- qui comprend des moyens pour déterminer des relations entre les éléments de données brutes qui, pour la segmentation, présentent des différences quant aux réflectivités de deux points d'objet respectifs, et des moyens pour réunir en un ou en plusieurs segments les éléments de données brutes suivant au moins un critère donné en se basant sur lesdites relations, les relations et/ou le critère dépendant d'au moins un paramètre de segmentation.

Fig. 1

EP 1 267 178 B1

# Fig. 2

Einlesen der
Rohdatenelemente — S 10

Korrektur von
Geistermessungen — S 12

Transformation in
kartesische Koordinaten — S 14

Korrektur bezüglich
Bewegung — S 16

Segmentbildung:
Berechnung der Abstände — S 18

Berechnung von
Segmenteigenschaften — S 20

Speicherung/Ausgabe — S 22

Objekterkennung und
-verfolgung — S 24

# Fig. 3

# Fig. 4

# Fig. 5

```
┌──────────────────────┐
│   Einlesen der       │ ─── S 10
│   Rohdatenelemente   │
└──────────────────────┘
          │
┌──────────────────────┐
│   Korrektur von      │ ─── S 12
│   Geistermessungen   │
└──────────────────────┘
          │
┌──────────────────────┐
│   Transformation in      │ ─── S 14
│   kartesische Koordinaten│
└──────────────────────┘
          │
┌──────────────────────┐
│   Korrektur bezüglich│ ─── S 16
│   Bewegung           │
└──────────────────────┘
          │
┌──────────────────────┐
│   Adaption der Segmen-  │ ─── S 26
│   tierungsparameter     │
└──────────────────────┘
          │
┌──────────────────────┐
│   Segmentbildung:       │ ─── S 18
│   Berechnung der Abstände│
└──────────────────────┘
          │
┌──────────────────────┐
│   Berechnung von        │ ─── S 20
│   Segmenteigenschaften  │
└──────────────────────┘
          │
┌──────────────────────┐
│   Speicherung/Ausgabe│ ─── S 22
└──────────────────────┘
          │
┌──────────────────────┐
│   Objekterkennung und   │ ─── S 24
│   -verfolgung           │
└──────────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5806019 A

**In der Beschreibung aufgeführte Nicht-Patentliteratur**

- **KLAUS C.J. DIETMAYER et al.** Model Based Object Classification and Object Tracking in Traffic Scenes from Range Images. *Proceedings IV 2001 IEEE Intelligent Vehicles Symposium,* Mai 2001
- **JAN SPARBERT et al.** Lane Detection and Street Type Classification using Laser Range Images. *IEEE Intelligent Transportation Systems Conference Proceedings,* August 2001
- **ANDREAS EWALD et al.** Laser Scanners for Obstacle Detection in Automotive Applications. *Proceedings of the IEEE Intelligent Vehicles Symposium,* 2000
- **ALEXANDER KIRCHNER et al.** *Der Laserscanner als intelligenter Kfz-Sensor*
- **ANDREAS EWALD et al.** Object Detection with Laser Scanners for Automotive Applications. *IFAC Control in Transportation Systems,* 2000